# EUROPEAN PATENT SPECIFICATION

(11) **EP 2 578 899 B1**
(45) Date of publication and mention of the grant of the patent: **24.07.2019**
(21) Application number: 11786562.6
(22) Date of filing: 20.05.2011
(51) Int. Cl.: F16D 65/56, B61H 15/00, F16D 55/224, F16D 65/14, F16D 65/18

(54) **BRAKE CYLINDER DEVICE AND DISC BRAKE DEVICE**
BREMSZYLINDERVORRICHTUNG UND SCHEIBENBREMSVORRICHTUNG
DISPOSITIF DE CYLINDRE DE FREIN ET DISPOSITIF DE FREIN À DISQUE

(30) Priority: 27.05.2010 JP 2010121240
(43) Date of publication of application: 10.04.2013
(73) Proprietor: Nabtesco Corporation, Tokyo 102-0093 (JP)
(72) Inventor: OHNO, Tomoya, Kobe-shi Hyogo 651-2271 (JP); OZAWA, Yoichiro, Kobe-shi Hyogo 651-2271 (JP); NAKAMURA, Jyoichi, Kobe-shi Hyogo 651-2271 (JP)
(74) Representative: Isarpatent
(86) International application number: PCT/JP2011/061609
(87) International publication number: WO 2011/148863

(56) References cited:
- EP-A1- 0 036 568
- EP-A1- 0 174 690
- EP-A1- 1 950 448
- WO-A1-79/00557
- JP-A- 52 013 215
- JP-A- 61 070 231
- JP-A- 2007 131 203
- JP-A- 2008 261 439
- US-A- 4 036 332
- US-A1- 2008 000 731
- US-A1- 2010 044 167

## Description

### Technical field

The present invention relates to a brake cylinder device including a clearance adjustment mechanism for automatically adjusting a clearance up to a brake operating position in a brake-released state, and a disc brake device including the brake cylinder device.

### Background Art

A known example of the brake cylinder device including a clearance adjustment mechanism for automatically adjusting a clearance up to a brake operating position (position where braking force can be generated) in a brake-released state is disclosed in Patent Document 1. The brake cylinder device disclosed in Patent Document 1 is provided with a push rod having an uneven surface formed in its exterior and a guide member that is movable together with the push rod. Also, an O-ring for engaging with the uneven surface is disposed in a space between the guide member and the push rod, and a clearance up to a brake operating position in a brake-released state is automatically adjusted by the O-ring climbing over the protrusions of the uneven surface when a force of a predetermined value or greater acts on the guide member. Thus, the clearance adjustment mechanism is configured by the uneven surface and the O-ring engaging therewith, and it is therefore possible, with a simple configuration, to achieve a brake cylinder device including a clearance adjustment mechanism for which sliding resistance can be readily adjusted and managed.

Meanwhile, a known example of a brake cylinder device including a clearance adjustment mechanism that does not use an O-ring unlike the above-described device is disclosed in Patent Document 2. The clearance adjustment mechanism of the brake cylinder device disclosed in Patent Document 2 is provided with a cylindrical sheath rod that is rotatably supported to a piston via a bearing and that includes a linear key groove and a spiral key groove formed in its outer circumference, and a push rod attached to a push rod receiver threadably engaging with the inner circumference of the sheath rod. Further, the teeth of the gear of a ratchet mechanism whose direction of rotation is restricted by engaging with a pawl are configured to be fitted into the key grooves of the sheath rod. Then, when the stroke of the piston is greater than or equal to a predetermined stroke during the breaking operation, the position of engagement between the pawl and the ratchet gear is displaced. Thereby, a clearance up to a brake operating position in the brake-released state is automatically adjusted.

### Citation List

### Patent Document

Patent Document 1: JP 2007-131203A or with a similar content EP1950448A1
Patent Document 2: JP 61-59158U

### Disclosure of the Invention

### Problem To be Solved by the Invention

The above-described clearance adjustment mechanism of the brake cylinder device disclosed in Patent Document 1 uses the elastic deformation of the O-ring, and thus is likely to be affected by the surrounding environment such as temperature and humidity at the time of operation of the clearance adjustment mechanism. For this reason, it is necessary to construct the clearance adjustment mechanism using an O-ring formed of a special material that is less likely to be affected by the surrounding environment such as temperature and humidity, which results in a cost increase. On the other hand, the clearance adjustment mechanism of the brake cylinder device disclosed in Patent Document 2 does not use an O-ring, and therefore requires very little cost to suppress the influence of the surrounding environment such as temperature and humidity. In the case of the clearance adjustment mechanism disclosed in Patent Document 2, however, it is necessary to provide a bearing for rotatably supporting the sheath rod on the rear side, i.e., the piston side, which is opposite to the brake output portion disposed on the front side, i.e., the tip side of the push rod. This results in a limiting factor in reducing the radial dimension on the rear side of the cylinder body in which the piston is disposed.

In view of the foregoing circumstances, it is an object of the present invention to provide a brake cylinder device including a clearance adjustment mechanism for automatically adjusting a clearance up to a brake operating position in a brake-released state at low cost, wherein the brake cylinder device is less likely to be affected by the surrounding environment such as temperature and humidity and can also achieve a reduction in the radial dimension of the cylinder body. It is also an object of the invention to provide a disc brake device including the brake cylinder device.

### Means for Solving the Problems

A brake cylinder device according to a first aspect of the present invention for achieving the above-stated objects is a brake cylinder device comprising: a cylinder body having a hollow interior; a piston that defines a pressure chamber inside the cylinder body and to which a biasing force generated by a piston spring is transmitted, the piston moving relative to the cylinder body against the biasing force of the piston spring by supply of pressure fluid to the pressure chamber; a brake output portion that is provided so as to be movable together with the piston or provided so as to be movable via a force amplifying mechanism for amplifying a force generated in the piston as a result of movement of the piston, the brake output portion being movable in a braking direction in which it projects from the cylinder body and an anti-braking direction in which it approaches the cylinder body. Further, the break cylinder device according to the first aspect of the invention also comprises: a threaded shaft that is connected to the brake output portion and has a thread formed on an outer circumference thereof; a guide tube that is attached to the piston or the force amplifying mechanism and accommodates the threaded shaft thereinside; a pusher spring disposed so as to be capable of biasing the threaded shaft toward the braking direction to the guide tube or the piston; a clutch nut for threadably engaging with a tip of the threaded shaft disposed on the brake output portion side with respect to the cylinder body; a front stopper disposed so as to be capable of coming into contact with the clutch nut on a front side, which is the brake output portion side with respect to the clutch nut such that a movement of the clutch nut with respect to the guide tube is restricted, and biasing the clutch nut and the threaded shaft in the anti-braking direction together with a movement of the guide tube in the anti-braking direction; a first clutch disposed so as to be capable of coming into contact with the clutch nut via a predetermined interval from the front stopper on a rear side, which is a side opposite to the brake output portion side with respect to the clutch nut; an adjustment stopper that is disposed so as to be movable relative to the clutch nut and the guide tube along the axial direction of the threaded shaft and whose movable range is restricted with respect to the cylinder body; a second clutch to which the adjustment stopper is fixed, and that is disposed so as to be capable of coming into contact with the clutch nut on the rear side; and an adjustment spring that is in contact with or connected to the adjustment stopper or the second clutch at a first end thereof and is capable of biasing the clutch nut toward the anti-braking direction.

According to this aspect of the invention, during the braking operation, by supplying the pressure fluid to the pressure chamber, the piston moves against the biasing force of the piston spring, which causes the brake output portion to move in the braking direction via the guide tube, the first clutch, the clutch nut, and the threaded shaft, and thereby braking force is generated. Note that in the case where the force amplifying mechanism is provided, the force from the piston is transmitted via the force amplifying mechanism. On the other hand, by discharging the pressure fluid from the pressure chamber, the piston moves in the opposite direction by the biasing force of the piston spring, which causes the brake output portion to move in the anti-braking direction via the guide tube, the front stopper, the clutch nut, and the threaded shaft, and thereby the brake is released. In the case where the clearance up to a brake operating position in the brake-released state is increased, for example, as a result of wear of the brake pads, the above-described clearance is automatically adjusted by the clearance adjustment mechanism composed of the clutch nut, the first and second clutches, the threaded shaft, the guide tube, the pusher spring, the front stopper, the adjustment stopper, and the adjustment spring.

In the case where the clearance adjustment is performed, first, during the braking operation, the range of movement of the adjustment stopper is restricted, and thereby a force capable of biasing the clutch nut in the anti-braking direction is accumulated in the adjustment spring as the accumulated force of the adjustment spring. Further, at this time, the contact of the clutch nut with the second clutch to which the adjustment stopper is fixed is released, and a clearance is formed between the second clutch and the clutch nut. Since the threaded shaft is biased in the braking direction by the pusher spring, when the guide tube starts moving in the anti-braking direction during the brake releasing operation, the threaded shaft and the brake output portion do not move in the anti-braking direction, resulting in a state in which the clutch nut is biased in the anti-braking direction by the accumulated force of the adjustment spring. At this time, a state occurs in which the contact of the clutch nut with the first clutch is released and the clutch nut is not in contact with the front stopper either, and further, because the clutch nut is not in contact with the second clutch either, the clutch nut becomes rotatable with respect to the threaded shaft in this state. Then, the clutch nut rotates with respect to the threaded shaft by the accumulated force of the adjustment spring so as to move in the anti-braking direction. Thereafter, the clearance between the clutch nut and the second clutch is lost and the clutch nut and the second clutch come in contact with each other, which makes the clutch nut unrotatable. As a result of the movement of the guide tube in the anti-braking direction, the brake output portion moves in the anti-braking direction together with the front stopper, the clutch nut, and the threaded shaft, and thereby the brake is released. Thus, the clutch nut moves relative to the threaded shaft in the anti-braking direction in the middle of the brake releasing operation, and therefore, the brake releasing operation ends in a state in which the position of the threaded shaft has moved further in the braking direction than in the state before the brake releasing operation. That is, a transition is made to a state in which the threaded shaft and the brake output portion have moved to positions projecting with respect to the cylinder body, as compared to the state before the braking operation. Consequently, the clearance up to the brake operating position in the brake-released state is automatically adjusted.

As described above, according to the present invention, the clearance adjustment mechanism includes the clutch nut, the first and second clutches, the threaded shaft, the guide tube, the pusher spring, the front stopper, the adjustment stopper, and the adjustment spring. Accordingly, the clearance adjustment is not performed using elastic deformation of rubber or the like, and it is therefore possible to achieve a configuration that is less likely to be affected by the surrounding environment such as temperature and humidity at low cost. Also, it is not necessary to provide a bearing in the structure for attaching the guide tube to the piston or the force amplifying mechanism, which makes it possible to reduce the radial dimension of the cylinder body on the rear side.

Therefore, according to the present invention, it is possible to provide a brake cylinder device including a clearance adjustment mechanism for automatically adjusting a clearance up to a brake operating position in a brake-released state at low cost, wherein the brake cylinder device is less likely to be affected by the surrounding environment such as temperature and humidity and can also achieve a reduction in the radial dimension of the cylinder body.

Note that with the brake cylinder device according to the present invention, in a state in which the automatic clearance adjustment operation by the clearance adjustment mechanism is not performed, the state in which the second clutch and the clutch nut are in contact with each other is maintained regardless of whether it is during the braking operation or when the brake is released, and the second clutch and the clutch nut are prevented from being spaced apart from each other. In other words, in the state in which the clearance adjustment operation is not performed, the clutch nut is biased in the anti-braking direction by the adjustment spring in contact with, or connected to the second clutch at one end, and thereby the state in which the second clutch and the clutch nut are in contact with each other is maintained. Consequently, the clutch nut is prevented from rotating with respect to the threaded shaft at any time other than during the clearance adjustment operation, and the position of the clutch nut with respect to the threaded shaft is prevented from shifting due to vibration or the like.

According to a brake cylinder device of a second aspect of the present invention, in the brake cylinder device of the first aspect, the threaded shaft has a hollow interior formed so as to be open toward a side opposite to the brake output portion, and the pusher spring biases the clutch nut threadably engaged with the threaded shaft toward the front stopper by biasing the threaded shaft from inside.

According to this aspect of the invention, the pusher spring that biases the threaded shaft is disposed inside the threaded shaft having a hollow structure, and is configured to bias the clutch nut threadably engaged with the threaded shaft toward the front stopper. Accordingly, the pusher spring can be disposed by efficiently using the space in the brake cylinder device. This can increase the space efficiency in the brake cylinder device, which makes it possible to realize a further size reduction.

According to a brake cylinder device of a third aspect of the present invention, the brake cylinder device of the second aspect further includes a pusher spring guide that is formed as a shaft-like portion provided so as to be movable together with the guide tube and is inserted inside the pusher spring provided as a coil-shaped spring to restrict deformation of the pusher spring in the buckling direction, wherein the pusher spring guide is disposed such that a tip thereof is slidable on the inside of the threaded shaft.

According to this aspect of the invention, the pusher spring guide is provided that extends inside the coil-shaped pusher spring and restricts the deformation of the pusher spring in the buckling direction. Accordingly, the dimension of the clearance to be adjusted by the clearance adjustment mechanism is increased, and therefore, the buckling of the pusher spring can be efficiently prevented even if a long pusher spring is required. Further, the pusher spring guide provided so as to be movable together with the guide tube is disposed such that its tip is slidable on the inside of the threaded shaft. Accordingly, it is possible, with a simple configuration of providing the shaft-like pusher spring guide, to readily achieve a structure that maintains the positional relationship between the threaded shaft and the piston such that they are displaced coaxially.

According to a brake cylinder device of a fourth aspect of the present invention, in the brake cylinder device of any one of the first to third aspects, the front stopper and the first clutch are provided as separate unitary members, and are each fixed to the guide tube.

According to this aspect of the invention, the front stopper and the first clutch are provided as separate unitary members and are separately fixed to the guide tube. Accordingly, it is not necessary to provide each of the front stopper and the first clutches disposed at the front and the rear, respectively, of the clutch nut as a divided structure and perform coupling with additional coupling means. Likewise, it is not necessary to provide the clutch nut at the front and the rear of which the front stopper and the first clutch are disposed as a divided structure and perform coupling with additional coupling means. This can simplify the configuration for the front stopper, the first clutch, and the clutch nut, and consequently, the size and the weight of the brake cylinder device as a whole can be reduced. Furthermore, due to the configuration in which the front stopper and the first clutch are separate unitary members and are fixed to the guide tube, it is possible to set the dimensional configuration such that the inner circumferences of the front stopper and the first clutch are located closer to the outer circumference of the threaded shaft, which makes it possible to realize a further size reduction for the brake cylinder device.

According to a brake cylinder device of a fifth aspect of the present invention, in the brake cylinder device of the fourth aspect, at least one of the front stopper and the first clutch is fixed to an inner circumference of the guide tube by threaded coupling.

According to this aspect of the invention, at least one of the front stopper and the first clutch provided as separate unitary members is fixed to the inner circumference of the guide tube by threaded coupling. Accordingly, the front stopper and the first clutch fixed to the guide tube by threaded coupling can be readily replaced at the time of maintenance, which makes it possible to increase the ease of maintenance.

According to a brake cylinder device of a sixth aspect of the present invention, the brake cylinder device of any one of the first to fifth aspects further includes an adjustment sleeve that is provided as a tubular member disposed around the threaded shaft and having flexibility, and is biased toward the anti-braking direction by a second end of the adjustment spring whose first end is in contact with or connected to the adjustment stopper or the second clutch, wherein the clutch nut and the adjustment sleeve are configured integrally by engagement of an engaging portion formed on the adjustment sleeve with an engaged portion formed on the clutch nut.

According to this aspect of the invention, the adjustment spring is disposed between the tubular adjustment sleeve disposed around the threaded shaft and the adjustment stopper or the second clutch, and a force for moving the clutch nut relative to the threaded shaft in the anti-braking direction is accumulated during the clearance adjustment operation along with the relative movement of the adjustment sleeve with respect to the adjustment stopper and the second clutch. Also, the adjustment sleeve is provided as a member having flexibility, and the adjustment sleeve and the clutch nut are integrated by engagement of the engaging portion on the adjustment sleeve side and the engaged portion on the clutch nut side. Accordingly, the engaging portion can be engaged with the engaged portion by temporarily causing the adjustment sleeve having flexibility to be elastically deformed, and therefore, the adjustment sleeve and the clutch nut can be integrated without using any additional fastening member. Thus, the structure for integrating the adjustment sleeve and the clutch nut does not require any additional fastening member, and it is therefore possible to achieve a further size reduction for the brake cylinder device.

According to a brake cylinder device of a seventh aspect of the present invention, in the brake cylinder device of the sixth aspect, the engaging portion of the adjustment sleeve engages from inside with the engaged portion formed on an inner circumference of the clutch nut, and a clearance formed between an inner circumference of the adjustment sleeve and the top of the ridge of the thread of the threaded shaft has a smaller dimension in the radial direction of the adjustment sleeve than a dimension, in the radial direction of the adjustment sleeve, of indented portions of the engaging portion and the engaged portion that are fitted together.

According to this aspect of the invention, the adjustment sleeve is configured to engage from inside of the clutch nut, and the dimension of the clearance between the inner circumference of the adjustment sleeve and the top of the ridge of the thread of the threaded shaft is set to be smaller than the radial dimension of the indented portions of the engaging portion and the engaged portion that are fitted together (the length, in the radial direction of the adjustment sleeve, of overlap of the indented portions). Accordingly, the engaging portion of the adjustment sleeve having flexibility is disposed between the clutch nut and the threaded shaft that are formed of a metallic material, and, moreover, a dimensional relationship is set that can prevent disengagement of the engaging portion of the adjustment sleeve from the engaged portion caused by deformation toward the threaded shaft. This makes it possible to firmly integrate the adjustment sleeve and the clutch nut even though the engagement configuration is simple.

According to a brake cylinder device of an eighth aspect of the present invention, in the brake cylinder device of the seventh aspect, the adjustment spring is disposed so as to bias, at the second end thereof, a spring receiver attached to the adjustment sleeve, and the spring receiver is disposed such that a clearance formed between the outer circumference of the spring receiver and the inner circumference of the guide tube has a dimension in the radial direction of the guide tube that is substantially zero, or is disposed such that the outer circumference of the spring receiver and the inner circumference of the guide tube are in sliding contact.

According to this aspect of the invention, the spring receiver is disposed such that the clearance to the guide tube is substantially zero or is disposed so as to be in sliding contact with the guide tube, and therefore, the threaded shaft can be supported to the guide tube via the spring receiver, which makes it possible to prevent the threaded shaft from being tilted with respect to the guide tube.

According to a brake cylinder device of a ninth aspect of the present invention, in the brake cylinder device of the eighth aspect, the spring receiver includes a bearing.

According to this aspect of the invention, the second end of the adjustment spring biases the adjustment sleeve via the bearing of the spring receiver, and therefore, when the adjustment sleeve is biased by the accumulated force of the adjustment spring, the clutch nut smoothly rotates together with the adjustment sleeve and moves in the braking direction.

According to a brake cylinder device of a tenth aspect of the present invention, the brake cylinder device of any one of the first to ninth aspects further includes a spring stopper that restricts, to a predetermined amount or less, the amount of displacement of the adjustment spring due to elastic deformation caused by relative displacement of a second end of the adjustment spring with respect to the first end thereof that is in contact with or connected to the adjustment stopper or the second clutch.

According to this aspect of the invention, the spring stopper is provided that restricts, to a predetermined amount or less, the amount of displacement of the adjustment spring during the elastic deformation of the adjustment spring such that the force for the clearance adjustment operation is accumulated. Accordingly, even if the clearance adjustment operation is forcibly performed in an operation that does not generate braking force with a conventional clearance adjustment operation (in the case of applying the brake cylinder device to a disc brake, an operation that does not cause the brake pads to come into contact with the disc with a conventional clearance adjustment operation: note that the clearance adjustment is performed using the force generated by the brake pads coming into contact with the disc, and the clearance adjustment cannot be performed without such contact), or in other words, in an operation in the so-called idling state, the stroke of the adjustment spring is restricted by the spring stopper. Accordingly, the adjustment spring will not be excessively compressed or extended, and the clearance adjustment operation can be performed forcibly even in the idling state. Note that the clearance is increased to exceed the range where clearance adjustment is possible in order to facilitate the replacement of the brake pads, and therefore, it has been hitherto necessary to manually perform the clearance adjustment one by one when the replacement of the brake pads has been performed. However, according to the present invention, as described above, the adjustment spring will not be excessively compressed or extended, and the clearance adjustment operation can be performed forcibly even in the idling state. Accordingly, by repeating operations corresponding to the braking operation and the brake releasing operation multiple times for the entire vehicle or the entire group of vehicles at once, the clearance is automatically adjusted in all brake cylinder devices. Thereby, when the brake pads have been replaced, it is possible to automatically perform the clearance adjustment on all brake cylinder devices in a vehicle or a group of vehicles at once, without the need to manually perform the clearance adjustment on brake cylinder devices one by one. Accordingly, it is possible to significantly reduce the number of steps and time and effort in the operation associated with the replacement of brake pads, which makes it possible to considerably promote the efficiency.

According to a brake cylinder device of an eleventh aspect of the present invention, in the brake cylinder device according to any one of the first to tenth aspects, teeth capable of engaging the second clutch with the clutch nut are formed on at least one of a surface of the second clutch that faces the clutch nut and a surface of the clutch nut that faces the second clutch.

According to this aspect of the invention, in a state in which the clearance adjustment is not being performed and the clutch nut and the second clutch are in contact with each other, the clutch nut and the second clutch engage with each other via the teeth formed on the mutually facing surfaces, and it is therefore possible to reliably prevent the clutch nut from rotating with respect to the threaded shaft due to vibrations or the like.

A brake cylinder device according to a twelfth aspect of the present invention is the brake cylinder device of any one of the first to eleventh aspect of the invention, wherein the threaded shaft is provided, at a tip thereof, with an operation engaging portion capable of engaging with an operation tool, and is disposed such that the tip passes through the brake output portion and faces outward, an engagement mechanism is further provided that is disposed on the outer circumference of the tip of the threaded shaft and engages the threaded shaft with the brake output portion, and the engagement mechanism includes an outer circumferential engaging portion that has engaging teeth capable of engaging with the brake output portion and is fixed to the outer circumference of the threaded shaft, and an engaging spring that biases the outer circumferential engaging portion toward the braking direction so as to engage the engaging teeth with the brake output portion.

According to this aspect of the invention, an operation engaging portion is provided at the tip disposed so as to pass through the brake output portion and face outward, and the threaded shaft and the brake output portion are engaged with each other by the engagement mechanism disposed on the outer circumference on the tip side of the threaded shaft. Further, the engagement mechanism includes an engagement spring and an outer circumferential engaging portion that has the engaging teeth, and is configured to engage the threaded shaft with the brake output portion via the engaging teeth by the engagement spring biasing the outer circumferential engaging portion in the braking direction. Therefore, by releasing the engagement of the outer circumferential engaging portion with the brake output portion via the engaging teeth against the spring force of the engagement spring to release the engagement of the threaded shaft with the brake output portion, and further rotating the threaded shaft with an operation tool, the threaded shaft can be rotated manually. Thus the positional relationship between the threaded shaft and the clutch nut can be readily brought back into the initial state, which is the state before the clearance adjustment is performed.

According to another aspect of the present invention, it is possible to configure a disc brake device according to the invention including any one of the above-described brake cylinder devices. That is, according to a disc brake device of a thirteenth aspect of the present invention includes the brake cylinder device of any one of the first to twelfth aspects; and a caliper body that is equipped with the brake cylinder device and is attached to a vehicle so as to be displaceable relative to the vehicle in the direction of an axle, wherein operation of the brake cylinder device causes a disc on the axle side to be sandwiched by a pair of brake pads attached to the caliper body, thereby generating braking force.

According to this aspect of the invention, it is possible to provide a disc brake device including a brake cylinder device provided with a clearance adjustment mechanism for automatically adjusting a clearance up to a brake operating position in a brake-released state at low cost, wherein the disc brake device is less likely to be affected by the surrounding environment such as temperature and humidity and can also achieve a reduction in the radial dimension of the cylinder body.

### Effects of the Invention

According to the present invention, it is possible to provide a brake cylinder device including a clearance adjustment mechanism for automatically adjusting a clearance up to a brake operating position in a brake-released state at low cost, wherein the brake cylinder device is less likely to be affected by the surrounding environment such as temperature and humidity and can also achieve a reduction in the radial dimension of the cylinder body. It is also possible to provide a disk brake device including the brake cylinder device at low cost.

### Brief Description of the Drawings

FIG. 1 is a side view of a disc brake device according to an embodiment of the present invention.
FIG. 2 is a plan view of the disc brake device shown in FIG. 1.
FIG. 3 is a cross-sectional view of a brake cylinder device according to a first embodiment of the present invention.
FIG. 4 is a diagram showing the tips of a brake output portion and a threaded shaft of the brake cylinder device shown in FIG. 3, as viewed in the direction indicated by the arrow C.
FIG. 5 is an enlarged cross-sectional view showing a part of the brake cylinder device shown in FIG. 3 in enlargement.
FIG. 6 is a cross-sectional view of the brake cylinder device shown in FIG. 3 for illustrating a case where the brake cylinder device is operated without performing automatic clearance adjustment by a clearance adjustment mechanism.
FIG. 7 is a cross-sectional view of the brake cylinder device shown in FIG. 3 for illustrating a case where the brake cylinder device is operated without performing automatic clearance adjustment by the clearance adjustment mechanism.
FIG. 8 is a cross-sectional view of the brake cylinder device shown in FIG. 3 for illustrating a case where the brake cylinder device is operated without performing automatic clearance adjustment by the clearance adjustment mechanism.
FIG. 9 is a cross-sectional view of the brake cylinder device shown in FIG. 3 for illustrating a case where the brake cylinder device is operated without performing automatic clearance adjustment by the clearance adjustment mechanism.
FIG. 10 is a cross-sectional view of the brake cylinder device shown in FIG. 3 for illustrating an operation in the case where automatic clearance adjustment by the clearance adjustment mechanism is performed.
FIG. 11 is a cross-sectional view of the brake cylinder device shown in FIG. 3 for illustrating an operation in the case where automatic clearance adjustment by the clearance adjustment mechanism is performed.
FIG. 12 is a cross-sectional view of the brake cylinder device shown in FIG. 3 for illustrating an operation in the case where automatic clearance adjustment by the clearance adjustment mechanism is performed.
FIG. 13 is a cross-sectional view of the brake cylinder device shown in FIG. 3 for illustrating an operation in the case where automatic clearance adjustment by the clearance adjustment mechanism is performed.
FIG. 14 is a cross-sectional view of the brake cylinder device shown in FIG. 3 for illustrating an operation in the case where automatic clearance adjustment by the clearance adjustment mechanism is performed.
FIG. 15 is a cross-sectional view of the brake cylinder device shown in FIG. 3 for illustrating an operation in the case where automatic clearance adjustment by the clearance adjustment mechanism is performed.
FIG. 16 is a cross-sectional view of the brake cylinder device shown in FIG. 3 for illustrating an operation in the case where automatic clearance adjustment by the clearance adjustment mechanism is performed.
FIG. 17 is a cross-sectional view of the brake cylinder device shown in FIG. 3 for illustrating an operation in the case where automatic clearance adjustment by the clearance adjustment mechanism is performed.
FIG. 18 is a cross-sectional view of the brake cylinder device shown in FIG. 3 for illustrating an operation in the case where a clearance adjustment operation is performed in an idling state.
FIG. 19 is a cross-sectional view of the brake cylinder device shown in FIG. 3 for illustrating an operation in the case where a clearance adjustment operation is performed in an idling state.
FIG. 20 is a cross-sectional view of the brake cylinder device shown in FIG. 3 for illustrating an operation in the case where a clearance adjustment operation is performed in an idling state.
FIG. 21 is a cross-sectional view of the brake cylinder device shown in FIG. 3 for illustrating an operation in the case where a clearance adjustment operation is performed in an idling state.
FIG. 22 is a cross-sectional view of a brake cylinder device according to a second embodiment of the present invention.

### Description of Embodiments

Hereinafter, embodiments of the present invention will be described with reference to the drawings. Note that a description will now be given of a brake cylinder device according to the present invention and a disc brake device including the brake cylinder device, taking as an example, a case where they are used for a railroad vehicle. Further, the accuracy of the attached drawings approximates to that of engineering drawings.

### First Embodiment

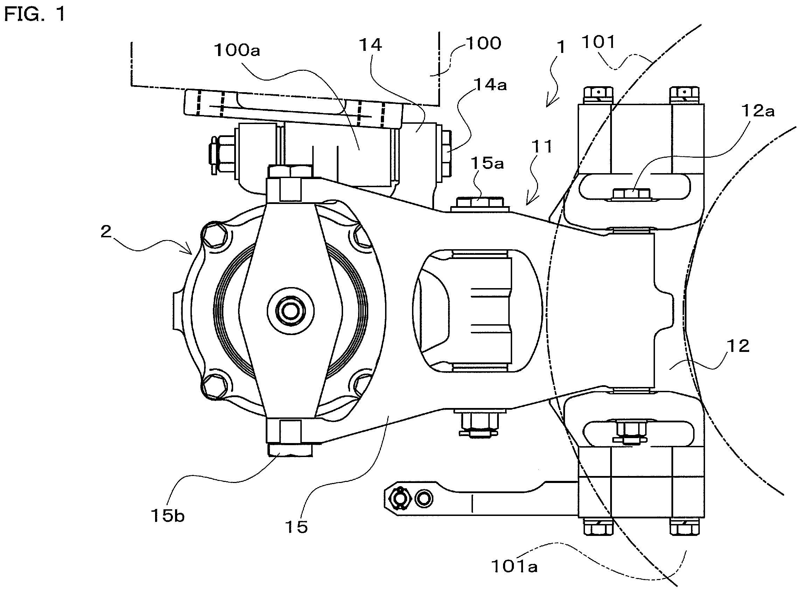

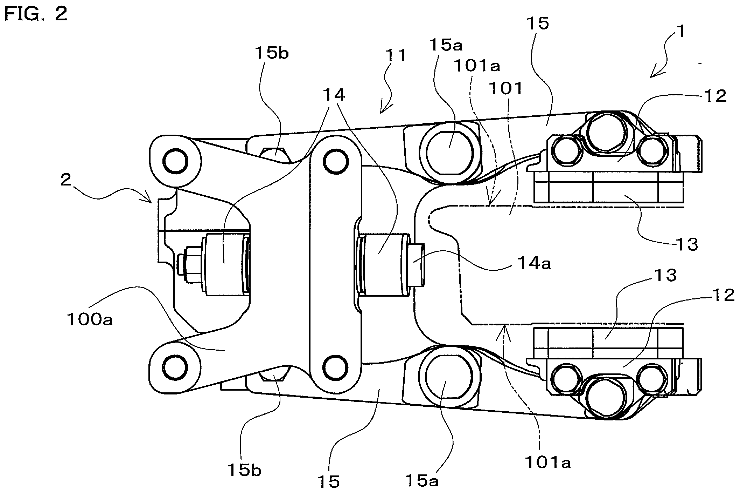

FIG. 1 is a side view of a disc brake device 1 according to an embodiment of the present invention, as viewed in the axle direction. FIG. 2 is a plan view of the disc brake device 1 shown in FIG. 1, as viewed from above. The disc brake device 1 shown in FIGS. 1 and 2 includes a brake cylinder device 2, a caliper body 11 equipped with the brake cylinder device 2 and attached to a vehicle body 100 so as to be displaceable relative to the vehicle body 100 in the axle direction, a pair of back plates (12, 12) serving as brake shoe holding portions for respectively holding a pair of brake pads (13, 13) serving as brake shoes, and so forth.

The pair of brake pads (13, 13) are attached to the caliper body 11 via the back plates 12. Also, the disc brake device 1 is configured such that operation of the brake cylinder device 2 causes the pair of brake pads (13, 13) to sandwich a disc-like brake disc 101 serving as a disc on the axle side that rotates in response to the rotation of a wheel (not shown) of a railroad vehicle, thus generating a braking force. Note that the brake disc 101 is formed in the shape of a disc having braking surfaces (101a, 101a) on both sides that are formed so as to be orthogonal to the rotational axis. Then, operation of the brake cylinder device 2 causes the brake pads (13, 13) to be pressed against the braking surfaces (101a, 101a) so as to sandwich the brake disc 101 from opposite sides from a direction substantially parallel to the direction of the rotational axis of the brake disc 101.

The caliper body 11 includes a coupling member 14 and a pair of brake levers (15, 15). The coupling member 14 is attached via a swing pin 14a to a bracket 100a fixed to the bottom face of the vehicle body 100 such that the coupling member 14 is swingable about an axis parallel to the traveling direction of the vehicle. Also, the pair of brake levers (15, 15) are provided substantially symmetrical with respect to the coupling member 14 so as to be swingable via a pair of fulcrum pins 15a. The fulcrum pins 15a are provided so as to extend in a direction perpendicular to the axial direction of the swing pin 14a, as viewed from the direction of the rotational axis of the disc brake 101.

The pair of brake levers (15, 15) are configured such that the brake cylinder device 2 is attached thereto at one end via a cylinder support pin 15b and the end is driven by the brake cylinder device 2. Also, the pair of back plates (12, 12) for holding the brake pads 13 are attached to the pair of brake levers (15, 15) via the fulcrum pins 15a at the other end, with respect to the end to which the brake cylinder device 2 is attached. The back plates 12 are swingably attached to the brake levers 15 via support pins 12a extending parallel to the fulcrum pins 15a.

In the above-described disc brake device 1, as will be described below, the cylinder body 20 of the brake cylinder device 2 is attached to one of the brake levers 15, whereas the brake output portion 21 is attached to the other brake lever 15, and an operation of causing the brake output portion 21 to project or move in close to the cylinder body 20 is performed by operation of the brake cylinder device 2. Thereby, the disc brake device 1 is driven such that portions of the pair of brake levers (15, 15) that are in the vicinity of the cylinder support pins 15b project from or approach each other.

By being driven in the above-described manner, the disc brake device 1 operates such that the pair of brake levers (15, 15) operate with the fulcrum pins 15a serving as the fulcrums and the brake disc 101 is sandwiched by the brake pads 13. Also, at this time, in the pair of brake levers (15, 15), one of the brake pads 13 that is provided at one of the brake levers 15 first comes into contact with a braking surface 101a of the brake disc 101. Furthermore, the other brake lever 15 presses the other brake pad 13 against a braking surface 101a of the brake disc 101, using a reaction force applied from the brake pad 13 that has come into contact with the braking surface 101a. Thereby, the brake disc 101 is sandwiched by the pair of brake pads (13, 13), and the frictional force generating between the brake pads (13, 13) and the braking surfaces (101a, 101a) brakes the rotation of the brake disc 101, thus braking the rotation of the wheel of the railroad vehicle that is provided coaxially with the brake disc 101.

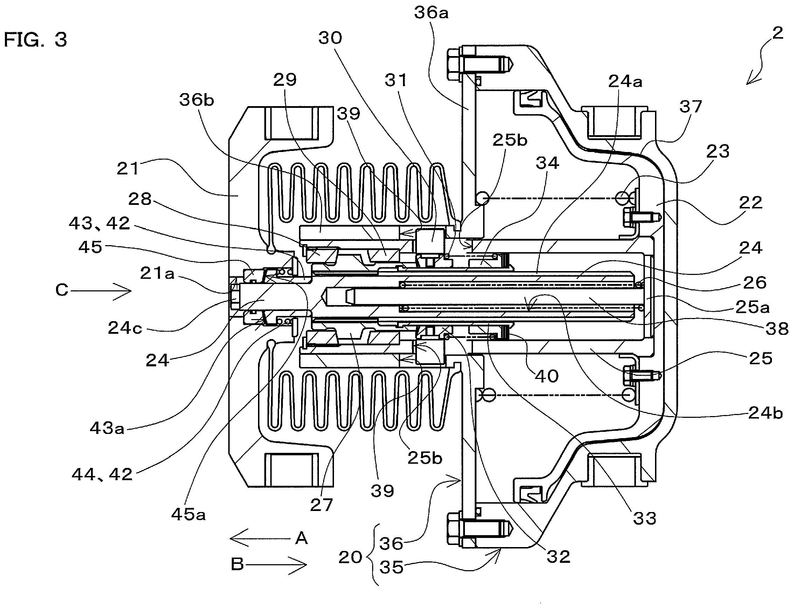

Next, a brake cylinder device 2 according to a first embodiment of the present invention will be described in detail. FIG. 3 is a cross-sectional view of the brake cylinder device 2. Although the brake cylinder device 2 shown in FIG. 3 is configured in the same manner as the brake cylinder device 2 shown in FIGS. 1 and 2, the outer shape is partly modified. Opposite ends of the brake cylinder device 2 in the brake operating direction are respectively connected to the cylinder support pins 15b. Also, the brake cylinder device 2 includes a cylinder body 20, a brake output portion 21, a piston 22, a piston spring 23, a threaded shaft 24, a guide tube 25, a pusher spring 26, a clutch nut 27, a front stopper 28, a first clutch 29, adjustment stoppers 30, an adjustment spring 31, a second clutch 32, an adjustment sleeve 33, a spring stopper 34, a pusher spring guide 38, a bearing 40, an engagement mechanism 42, and so forth. Of the above-described components, those other than the adjustment sleeve 33 are formed of, for example, a metallic material such as an iron-based material, and the adjustment sleeve 33 is formed of, for example, a resin material. Note that FIG. 3 shows the outer shape, rather than the cross section, of the adjustment stoppers 30, the pusher spring guide 38, and so forth.

The cylinder body 20 is composed of a first casing portion 35 and a second casing portion 36, and has a hollow interior. Accommodated inside the cylinder body 20 are the piston 22, the piston spring 23, a part of the threaded shaft 24, the guide tube 25, the pusher spring 26, the clutch nut 27, the front stopper 28, the first clutch 29, the adjustment stoppers 30, the adjustment spring 31, the second clutch 32, the pusher spring guide 38, the adjustment sleeve 33, the spring stopper 34, and so forth. The first casing portion 35 is substantially cup-shaped having a bottom, and the second casing portion 36 is fixed with a bolt so as to close the opening side of the first casing portion 35. Note that ends of the first casing portion 35 are connected to one of the brake levers 15 with the cylinder support pins 15b. The second casing portion 36 is provided with a planar portion 36a formed in the shape of a flange so as to close the first casing portion 35 and a tubular portion 36b formed in the shape of a tube projecting perpendicularly to the planar portion 36a.

The piston 22 is disposed so as to partition the interior of the cylinder body 20, and is provided so as to come into sliding contact with the inner circumferential face of the first casing portion 35 in an air-tight manner, and to be axially slidable with respect to the first casing portion 35. The space defined by the piston 22 and the first casing portion 35 forms a pressure chamber 37 inside the cylinder body 20. Compressed air serving as pressure fluid is supplied to and discharged from the pressure chamber 37 via communication passages (not shown).

The piston spring 23 is provided as a coil-shaped spring disposed inside the cylinder body 20 on the side opposite to the pressure chamber 37 via the piston 22, and is disposed between the piston 22 and the planar portion 36a of the second casing portion 36. Thus a biasing force generated by the piston spring 23 is transmitted to the piston 22 that defines the pressure chamber 37 inside the cylinder body 20. Also, the piston spring 23 is disposed inside the cylinder body 20 so as to bias the piston 22 toward the pressure chamber 37 side. Then, by supplying compressed air to the pressure chamber 37, the piston 22 moves relative to the cylinder body 20 against the biasing force of the piston spring 23 and thus moves in a braking direction (the direction indicated by the arrow A in FIG. 3). On the other hand, by discharging compressed air from the pressure chamber 37, the piston 22 moves by the biasing force of the piston spring 23 in an anti-braking direction (the direction indicated by the arrow B in FIG. 3), which is the direction opposite to the braking direction.

The brake output portion 21 is connected to the piston 22 via the threaded shaft 24, the guide tube 25, and so forth, which will be described below, and is provided so as to be movable together with the piston 22. Thereby, the brake output portion 21 is provided so as to be movable in the braking direction (the direction of the arrow A) in which it projects from the cylinder body 20 and the anti-braking direction (the direction of the arrow B) in which it approaches the cylinder body 20. Also, the brake output portion 21 is connected to the other brake lever 15 with the cylinder support pins 15b. Note that a bellows structure disposed so as to cover the circumference of the tubular portion 36b of the second casing portion 36 is provided as a protective cover between the brake output portion 21 and the cylinder body 20.

The threaded shaft 24 is provided as a shaft-like member connected to the brake output portion 21 and having a thread 24a formed on the outer circumference thereof. Also, the threaded shaft 24 has a hollow interior formed so as to be open toward the side opposite to the brake output portion 21 (in this embodiment, the piston 22 side). That is, the interior hollow region of the threaded shaft 24 is provided as an axial bore 24b extending axially and is open only on the side opposite to the brake output portion 21.

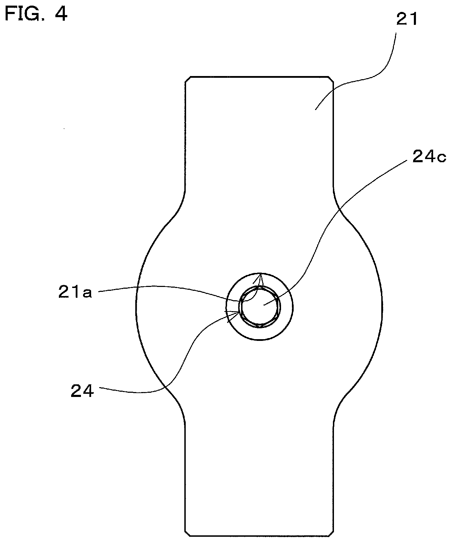

FIG. 4 is a diagram showing the tips of the brake output portion 21 and the threaded shaft 24, as viewed in the direction indicated by the arrow C in FIG. 3. As shown in FIGS. 3 and 4, the threaded shaft 24 is provided, at its tip, a hexagon head portion 24c serving as an operation engaging portion capable of engaging with an operation tool (for example, a socket wrench). Note that this hexagon head portion 24c is formed as a portion having a hexagonal cylinder-shaped side (formed in the same manner as a head of a hexagon head bolt, for example), and is fixed to the body portion of the threaded shaft 24 so as to integrally rotate. Also, a through hole is formed in the center portion of the brake output portion 21, and the tip of the threaded shaft 24 is disposed so as to pass through the through hole of the brake output portion 21 and face outward. Note that the hexagon head portion 24 at the tip of the threaded shaft 24 is disposed in a recess 21a that is formed so as to configure a part of the through hole and be open on the end face of the brake output portion 21.

The engagement mechanism 42 is disposed on the outer circumference of the tip of the threaded shaft 24, and is provided as a mechanism for engaging the threaded shaft 24 with the brake output portion 21. The engagement mechanism 42 includes an outer circumferential engaging portion 43 and an engaging spring 44. Further, in the brake output portion 21, an engaging block 45 is provided in the center portion in which the through hole is formed. This engaging block 45 is provided as a portion for engaging with the engagement mechanism 42 in the brake output portion 21, and is fixed to the body portion of the brake output portion 21 in the above-described through hole. Also, in the engaging block 45, a hole in which the tip of the threaded shaft 24 passes through in a slidable state is formed so as to extend through the engaging block 45.

The outer circumferential engaging portion 43 of the engagement mechanism 42 includes a tubular fixed portion and an engaging teeth portion that are integrated with each other. The tubular fixed portion is formed in a tubular shape and fixed on the outer circumference of the threaded shaft 24. The engaging teeth portion is provided at one end of the above-described tubular fixed portion and formed as a portion expanding so as to form a flange shape or a portion expanding so as to to form an umbrella-like shape having a large hole opening in the center, and has engaging teeth 43a capable of engaging with the brake output portion 21. The engaging teeth portion is disposed facing the engaging block 45 in the through hole in the center of the brake output portion 21. Further, in the portion of the engaging block 45 in the brake output portion 21 opposite the above-described engaging teeth portion, engaging teeth 45a for engaging with the engaging teeth 43a in the engaging teeth portion are formed.

The engaging spring 44 in the engagement mechanism 42 is provided as a coil-shaped spring, and is disposed in the through hole in the center of the brake output portion 21 on the outer circumference of the tubular fixed portion of the outer circumferential engaging portion 43. Further, the engaging spring 44 is disposed such that one end thereof is in contact with the engaging teeth portion on the side opposite to the side on which the engaging teeth 43a are formed. Also, the other end of the engaging spring 44 is disposed so as to be in contact with a ring-shaped plate member fixed to the brake output portion 21 to close a part of the opening of the through hole in the center of the brake output portion 21 opposite to the recess 21a side. Thereby, the engaging spring 44 is configured to bias the outer circumferential engaging portion 43 toward a braking direction so as to engage the engaging teeth 43a of the outer circumferential engaging portion 43 integrally fixed to the body portion of the threaded shaft 24 with the engaging teeth 45a of the engaging block 45 in the brake output portion 21. Thus, the threaded shaft 24 and the brake output portion 21 engage with each other via the engagement mechanism 42.

The guide tube 25 is formed as a cylindrical member, and is disposed such that one end thereof is fixed and attached to the piston 22 and passes thorough the tubular portion 36b of the second casing portion 36 of the cylinder body 20. A base plate 25a is attached to the end of the guide tube 25 that is fixed to the piston 22, and the end facing the brake output portion 21 is provided so as to be open. Also, the threaded shaft 24 is accommodated in the interior space region of the guide tube 25.

Further, the surrounding wall of the guide tube 25 is provided, at a middle position in the direction of the cylinder axis, a pair of slit apertures (25b, 25b) that are formed therethrough in the form of slits. The pair of slit apertures (25b, 25b) are provided so as to be disposed at positions along the diameter direction of the cylindrical guide tube 25, and are formed as openings through which the adjustment stoppers 30, which will be described below, pass from the inside toward the outside.

The pusher spring 26 is provided as a coil-shaped spring, and is disposed in the axial bore 24b of the threaded shaft 24. Note that the axial bore 24b is provided with a stepped portion whose diameter is reduced stepwise toward the inner side. Also, the pusher spring 26 is provided as a compression spring, and is disposed such that one end is in contact with the stepped portion of the axial bore 24b and the other end is in contact with the base plate 25a of the guide tube 25. Thereby, the pusher spring 26 is disposed so as to be capable of biasing the threaded shaft 24 to the guide tube 25 from inside toward the braking direction.

The pusher spring guide 38 is formed as a shaft-like portion that is fixed to the base plate 25a of the guide tube 25 and is provided so as to be movable together with the guide tube 25. Also, the pusher spring guide 38 is disposed so as to project toward the axial bore 24b of the threaded shaft 24, and is inserted inside the pusher spring 26. Thereby, the pusher spring guide 38 is configured to restrict the deformation of the pusher spring 26 in the buckling direction. Further, the pusher spring guide 38 is inserted in a state in which the tip is in sliding contact with the inner bore portion with a reduced diameter of the axial bore 24b of the threaded shaft 24. Thereby, the pusher spring guide 38 is disposed such that the tip is slidable on the inside of the threaded shaft 24.

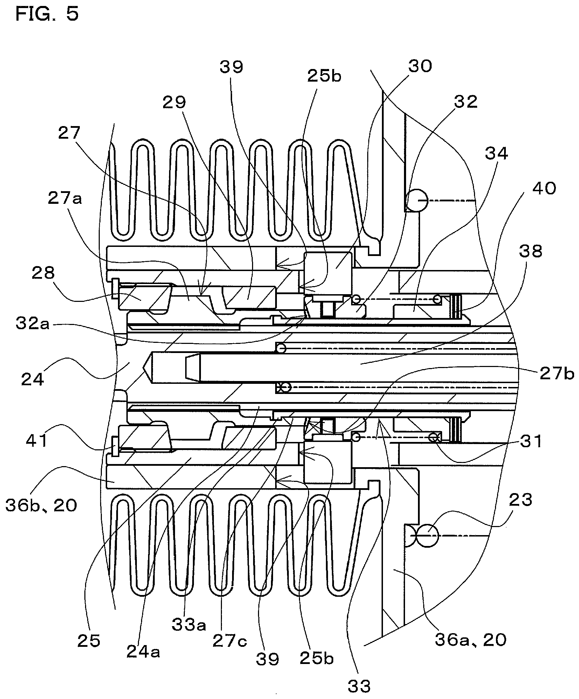

FIG. 5 is an enlarged cross-sectional view showing a part of the brake cylinder device 2 shown in FIG. 3 in enlargement. As shown in FIGS. 3 and 5, the clutch nut 27 is provided as a tubular member having an internally threaded portion formed on its inner circumference, and is configured so as to threadably engage with the tip of the threaded shaft 24 disposed on the brake output portion 21 side with respect to the cylinder body 20. Further, on the outer circumference of the clutch nut 27 at an axially middle position, a protrusion 27a is provided that is formed so as to extend across the circumferential direction and project radially outward and that is capable of coming into contact with the front stopper 28 and the first clutch 29, which will be described below. Note that due to the provision of the clutch nut 27 as described above, the pusher spring 26 is configured to bias the threaded shaft 24 from inside, thereby biasing the clutch nut 27 threadably engaged with the threaded shaft 24 toward the front stopper 28.

The front stopper 28 is provided as a cylindrical member having an externally threaded portion formed on its outer circumference and having a short axial length, and is formed as a unitary member. Also, the front stopper 28 is threadably engaged, at its externally threaded portion, with an internally threaded portion formed on the inner circumference of the tip of the guide tube 25 that faces the brake output portion 21. That is, the front stopper 28 is fixed to the inner circumference of the guide tube 25 by threaded coupling. Note that a circumferentially extending groove is formed on the inner circumference of the tip of the guide tube 25 on the brake output portion 21 side with respect to the front stopper 28. Then, a snap ring 41 for engaging with the end of the front stopper 28 on the brake output portion 21 side is fitted into the groove, thereby preventing withdrawal of the front stopper 28.

Further, the front stopper 28 is disposed outside and concentrically with respect to the end of the clutch nut 27 on the brake output portion 21 side and the threaded shaft 24 (such that the radial center positions coincide). Also, the front stopper 28 is disposed so as to be capable of coming into contact with the protrusion 27a on the front side, which is the brake output portion 21 side with respect to the clutch nut 27, so as to restrict movement of the clutch nut 27 relative to the guide tube 25. Thereby, the front stopper 28 is configured to be able to bias the clutch nut 27 and the threaded shaft 24 threadably engaged with the clutch nut 27 in the anti-braking direction together with the movement of the guide tube 25 in the anti-braking direction.

The first clutch 29 is provided as a cylindrical member having a short axial length, and is formed as a unitary member separate from the front stopper 28. Also, the first clutch 29 is press-fitted inside the guide tube 25 and fixed to the guide tube 25. Note that an end of the first clutch 29 is in contact and aligned with a step-shaped portion formed on the inner circumference of the guide tube 25.

Further, the first clutch 29 is disposed outside and concentrically with respect to the end of the clutch nut 27 on the piston 22 side and the threaded shaft 24 (such that the radial center positions coincide). Also, the first clutch 29 is disposed so as to be capable of coming into contact with the protrusion 27a of this clutch nut 27 with a predetermined interval from the front stopper 28 from the rear side, which is the side opposite to the brake output portion 21 side with respect to the clutch nut 27.

Further, the surface of the first clutch 29 that faces the clutch nut 27 is provided as a tapered surface that is formed obliquely with respect to the axial direction so as to form a part of a conic section, with the axial direction of the threaded shaft 24 as the center line. The surface of the protrusion 27a of the clutch nut 27 that faces the first clutch 29 is also provided as a tapered surface that is formed obliquely with respect to the axial direction so as to form a part of a conic section, with the axial direction of the threaded shaft 24 as the center line. Also, the above-described surfaces of the first clutch 29 and the clutch nut 27 that face each other are formed as surfaces that are inclined at substantially the same angle with respect to the axial direction of the threaded shaft 24 and that come into contact with each other.

Two adjustment stoppers 30 are provided as a pair, and are fixed to the second clutch 32, which will be described below, formed as a ring-shaped member or a cylindrical member having a short axial length. Each adjustment stopper 30 is provided as a block-shaped member protruding radially outward of the second clutch 32.

Also, the pair of adjustment stoppers (30, 30) are fixed to the second clutch 32, which will be described below, so as to be disposed in positions along the diameter direction of the guide tube 25 and the threaded shaft 24. Further, the pair of adjustment stoppers (30, 30) are disposed so as to protrude to pass through a pair of slit portions (25b, 25b) in the guide tube 25. Note that the tubular portion 36b of the second casing portion 36 of the cylinder body 20 is provided, at positions along the diameter direction of the tubular portion 36b, with a pair of stopper stroke restricting portions (39, 39) that are provided as apertures formed therethrough in the form of slits extending parallel to the axial direction of the threaded shaft 24. Also, the projecting ends of the adjustment stoppers 30 are disposed so as to be movable along the stopper stroke restricting portions 39, and also disposed so as to be capable of coming into contact with the ends of the stopper stroke restricting portions 39 in the braking direction and the ends thereof in the anti-braking direction.

By being provided in the above-described manner, the adjustment stoppers 30 are configured such that they are movable relative to the clutch nut 27 and the guide tube 25 along the axial direction of the threaded shaft 24 and that their movable range is restricted with respect to the cylinder body 20.

The second clutch 32 to which the adjustment stoppers 30 are fixed is formed as a ring-shaped member or a cylindrical member having a short axial length, as described above, and is disposed around the threaded shaft 24 and the adjustment sleeve 33, which will be described below, and inside the guide tube 25. Further, the second clutch 32 is disposed so as to be capable of coming into contact, at its end in the braking direction, with the clutch nut 27 from the rear side, and is in contact, at its end in the anti-braking direction, with the adjustment spring 31, which will be described below.

Also, on an end surface of the second clutch 32 in the braking direction that faces the clutch nut 27, teeth 32a are formed across the circumferential direction. Meanwhile, on an end surface of the clutch nut 27 in the anti-braking direction that faces the second clutch 32, teeth 27b are formed across the circumferential direction. The teeth 32a on the second clutch 32 side and the teeth 27a on the clutch nut 27 side are formed as teeth capable of engaging the second clutch 32 and the clutch nut 27.

The adjustment sleeve 33 is provided as a tubular member formed of resin and thus having flexibility, and is disposed around the threaded shaft 24. Also, the adjustment sleeve 33 is provided, on the outer circumference on its end side in the braking direction, with an engaging portion 33a formed as an indented portion. Then, the clutch nut 27 is provided, on the inner circumference on its end side in the anti-braking direction, with an engaged portion 27c formed as an indented portion that interfits with the indented portion of the engaging portion 33a. The adjustment sleeve 33 and the clutch nut 27 are configured integrally by engagement of the engaging portion 33a on the adjustment sleeve 33 side with the engaged portion 27c on the clutch nut 27 side.

Note that the engaging portion 33a of the adjustment sleeve 33 is provided so as to engage, from the inside, with the engaged portion 27c formed on the inner circumference of the clutch nut 27. Also, the clearance formed between the inner circumference of the adjustment sleeve 33 and the top of the ridge of the thread 24a of the threaded shaft 24 is configured to have a smaller dimension in the radial direction of the adjustment sleeve 33 than a dimension, in the radial direction of the adjustment sleeve 33, of the indented portions of the engaging portion 33a and the engaged portion 27c that are fitted together (the length of overlap of the indented portion in the radial direction of the adjustment sleeve 33).

The adjustment spring 31 is provided as a coil-shaped spring disposed around the adjustment sleeve 33. Also, the adjustment spring 31 is disposed so as to be in contact with (or to be connected to), at a first end, the end of the second clutch 32 in the anti-braking direction, and to bias, at a second end, a spring receiver attached to the end of the adjustment sleeve 33 in the anti-braking direction. Note that in the present embodiment, the spring stopper 34 and a bearing 40 constitute the above-described spring receiver. Thereby, the adjustment sleeve 33 is configured to be biased in the anti-braking direction by the second end of the adjustment spring 31 whose first end is in contact with the second clutch 32. Also, the adjustment spring 31 is configured to be capable of biasing, in the anti-braking direction, the clutch nut 27 engaged and thus integrated with the adjustment sleeve 33.

The bearing 40 included in the above-described spring receiver is disposed between the outer circumference of the adjustment sleeve 33 and the inner circumference of the guide tube 35, and engages with a flange-shaped projection formed around the outer circumference of the end of the adjustment sleeve 33 in the anti-braking direction across the circumferential direction, thereby being attached to the adjustment sleeve 33. Also, the bearing 40 included in the above spring receiver is disposed such that the clearance formed between the outer circumference of the bearing 40 (i.e., the outer circumference of the spring receiver) and the inner circumference of the guide tube 25 has a dimension in the radial direction of the guide tube 25 that is substantially zero. Note that the spring receiver including the bearing 40 may be disposed such that the outer circumference of the bearing 40 (i.e., the outer circumference of the spring receiver) and the inner circumference of the guide tube 25 are in sliding contact.

The spring stopper 34 is provided as a tubular member disposed around the end side of the adjustment sleeve 33 in the anti-braking direction. Also, a flange-shaped portion is formed at the end of the spring stopper 34 in the anti-braking direction, and the spring stopper 34 is in contact with the bearing 40 at the end face of this flange-shaped portion in the anti-braking direction. Further, the spring stopper 34 is in contact with the second end of the adjustment spring 31 (the end in the anti-braking direction) at the end face of the above-described flange-shaped portion in the braking direction. Note that the bearing 40 is disposed between the spring stopper 34 and the adjustment sleeve 33, and therefore the adjustment sleeve 33 is configured to be rotatable with respect to the spring stopper 34.

The end of the tubular portion of the spring stopper 34 in the braking direction faces the end of the second clutch 32 in the anti-braking direction via a gap. Also, the end of the tubular portion of the spring stopper 34 in the braking direction is disposed so as to come into contact with the end of the second clutch 32 in the anti-braking direction when the adjustment spring 31 is significantly compressed. Thereby, the spring stopper 34 is configured to restrict, to a predetermined amount or less, the amount of displacement of the adjustment spring 31 due to the elastic deformation caused by the second end of the adjustment spring 31 being relatively displaced with respect to the first end thereof in contact with the adjustment stoppers 30.

Note that even if the biasing force of the adjustment spring 31 becomes large as a result of accumulation of the force, the frictional force resulting from this biasing force will not impede the rotation of the clutch nut 27 engaged and integrated with the adjustment sleeve 33 because the above-described components of the spring receiver includes the bearing 40, in contrast to a configuration in which grease is simply applied to a disc-like member without the use of a bearing. That is, due to the provision of the bearing 40, the above-described biasing force hardly affects the direction of rotation of the adjustment sleeve 33 and the clutch nut 27 that rotate together with the bearing 40, and therefore, the clearance adjustment can be performed reliably, as will be described below. Note that the bearing 40 may be a rolling bearing or a sliding bearing, or may be a radial bearing or a thrust bearing as long as it can reduce the sliding resistance between the adjustment spring 31 and the adjustment sleeve 33.

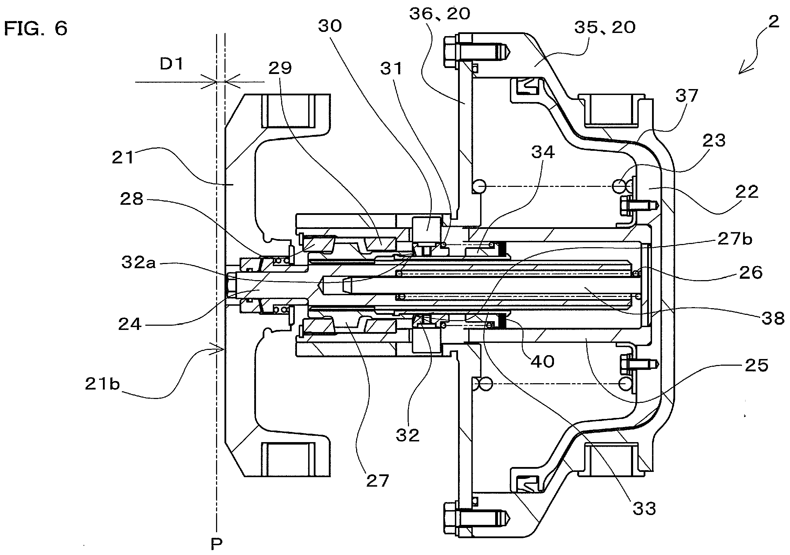

Next the operation of the brake cylinder device 2 will be described with reference FIGS. 6 to 21, which are cross-sectional views of the brake cylinder device 2. Note that the illustration of the bellows structure disposed between the brake output portion 21 and the cylinder body 20 is omitted in FIGS. 6 to 21. Also, FIGS. 6 to 21 are shown using the position of the cylinder body 20 as a reference, and the components other than the cylinder body 20 are shown in their relative positions with respect to the cylinder body 20.

Further, in FIGS. 6 to 17, the position of an end 21b of the brake output portion 21 in the braking direction that allows the brake output portion 21 to move relative to the cylinder body 20 to enable the braking operation is indicated by the two-dot chain line P (hereinafter, the position indicated by the two-dot chain line P is referred to as the "brake operating position P"). That is, in a state in which the position of the end 21b of the brake output portion 21 with respect to the cylinder body 20 has reached the brake operating position P (the position where a braking force can be generated), the pair of brake pads (13, 13) of the disc brake device 1 are in contact with the brake disc 101.

FIGS. 6 to 9 are cross-sectional views of the brake cylinder device 2 for illustrating a case where the brake cylinder device 2 is operated without performing automatic clearance adjustment by a clearance adjustment mechanism. The cross-sectional view of FIG. 6 shows a state before the braking operation is performed, or in other words, a break-released state. The distance D1 between the end 21b of the brake output portion 21 and the brake operating position P in this state is indicated by the arrows in the drawing.

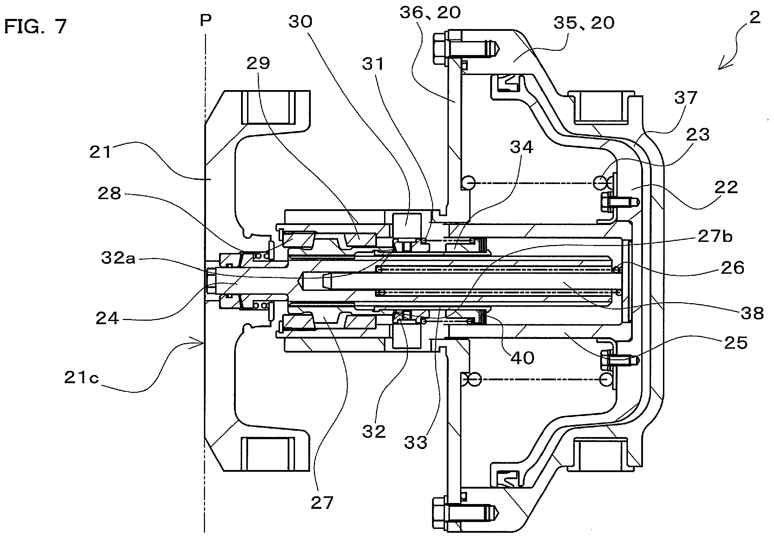

During the braking operation, first, a transition from the state shown in the cross-sectional view of FIG. 6 to the state shown in the cross-sectional view of FIG. 7 is made by supply of compressed air to the pressure chamber 37. That is, as compressed air is supplied to the pressure chamber 37, the piston 22 moves in the braking direction together with the guide tube 25 against the biasing force of the piston spring 23. Then, the threaded shaft 24 moves in the braking direction together with the guide tube 25 and the pusher spring 26, and the end 21b of the brake output portion 21 reaches the brake operating position P. Note that the state shown in FIG. 7 is a state at an instant when the pair of brake pads (13, 13) have come into contact with the brake disc 101 as a result of the end 21b of the brake output portion 21 having reached the brake operating position P, and no braking force has been generated in this state.

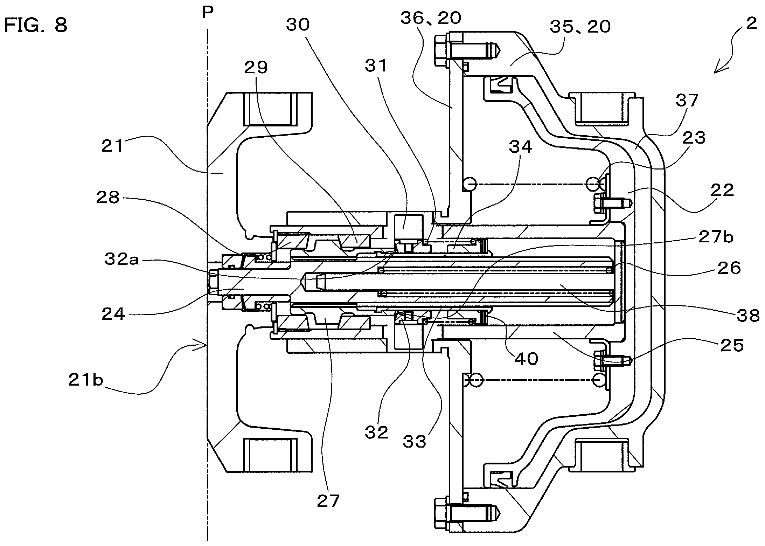

In the state shown in FIG. 7, the movement, in the braking direction, of the threaded shaft 24 and the clutch nut 27 threadably engaged therewith is constrained. Then, the supply of compressed air to the pressure chamber 37 is further continued from the state shown in FIG. 7, and thereby, as shown in the cross-sectional view of FIG. 8, the guide tube 25 moves in the braking direction together with the piston 22, which causes the front stopper 28 and the first clutch 29 to move toward the front (in the braking direction) together with the guide tube 25. Consequently, the front stopper 28 that has been in contact with the clutch nut 27 is spaced apart from the clutch nut 27, and the first clutch 29 that has been spaced apart from the clutch nut 27 is in contact with the clutch nut 27. Upon reaching the state shown in FIG. 8, the pair of brake pads (13, 13) press the brake disc 101, and braking force is output.

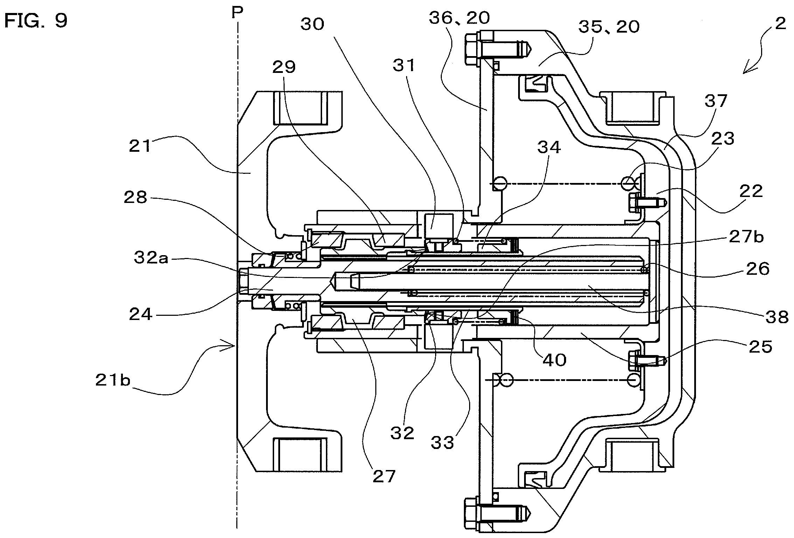

On the contrary, during the brake releasing operation, the compressed air is discharged from the pressure chamber 37. When the compressed air is discharged from the pressure chamber 37, the piston 22 moves in the anti-braking direction together with the guide tube 25 by the biasing force of the piston spring 23. Then, the front stopper 28 and the first clutch 29 move to the rear (in the anti-braking direction) together with the guide tube 25. At this time, because the threaded shaft 24 is biased in the braking direction by the pusher spring 26, a state temporally occurs in which the clutch nut 27 threadably engaged with the threaded shaft 24 is spaced apart from both the first clutch 29 and the front stopper 28, as shown in the cross-sectional view of FIG. 9. That is, a state temporarily occurs in which the first clutch 29 that has been in contact with the clutch nut 27 is spaced apart from the clutch nut 27, and the front stopper 28 that has been spaced apart from the clutch nut 27 is not yet in contact with the clutch nut 27.

As shown in FIG. 9, in the state in which the clutch nut 27 is spaced apart from both the first clutch 29 and the front stopper 28, rotation of the clutch nut 27 is not constrained either by the front stopper 28 or the first clutch 29. However, in this state as well, the adjustment spring 31 is in contact at the first end thereof with the second clutch 32, and biases, at the second end, the clutch nut 27 in the anti-braking direction via the spring receiver (spring stopper 34, bearing 40) and the adjustment sleeve 33. Therefore, the state in which the second clutch 32 and the clutch nut 27 are in contact with each other is maintained in a state in which the teeth 32a on the second clutch 32 side and the teeth 27b on the clutch nut 27 side are engaged with each other. Thereby, in the state shown in FIG. 9, the clutch nut 27 is prevented from rotating with respect to the threaded shaft 24.

Accordingly, in the case where the clearance adjustment by the clearance adjustment mechanism is unnecessary and the brake cylinder device 2 operates, a state in which the second clutch 32 and the clutch nut 27 are in contact with each other is maintained even if the state occurs in which the clutch nut 27 is spaced apart from both the front stopper 28 and the first clutch 29. Also, even if vibration or the like occurs, the clutch nut 27 is prevented from rotating and positionally shifting with respect to the threaded shaft 24.

Discharge of the compressed air from the pressure chamber 37 is further continued through the transition from the state shown in FIG. 8 to the state shown in FIG. 9, and thereby, the brake cylinder device 2 momentarily shifts to the same state as the state shown in FIG. 7. In other words, the clutch nut 27, which has achieved the state of being spaced apart from the first clutch 29, and thus being spaced apart from both the front stopper 28 and the first clutch 29, comes in contact with the front stopper 28.

After the state in which the brake cylinder device 2 momentarily shifts to the same state as the state shown in FIG. 7, the discharge of the compressed air from the pressure chamber 37 is further continued, and thereby the piston 22 and the guide tube 25 move further in the anti-braking direction. Thereby, the front stopper 28 biases the clutch nut 27 and the threaded shaft 24 in the anti-braking direction with the movement of the guide tube 25 in the anti-braking direction. In other words, the clutch nut 27 in contact with the front stopper 28 and the threaded shaft 24 threadably engaged with the clutch nut 27 also move in the anti-braking direction. Consequently, a brake-released state is achieved as shown in FIG. 6. In the braking operation and brake releasing operation shown in FIGS. 6 to 9, as described above, the clutch nut 27 does not rotate with respect to the threaded shaft 24, and therefore, the automatic clearance adjustment by the clearance adjustment mechanism will not be performed. That is, the distance D1 between the end 21b of the brake output portion 21 and the brake operating position P does not change before and after the time at which the above-described braking operation and brake releasing operation are performed.

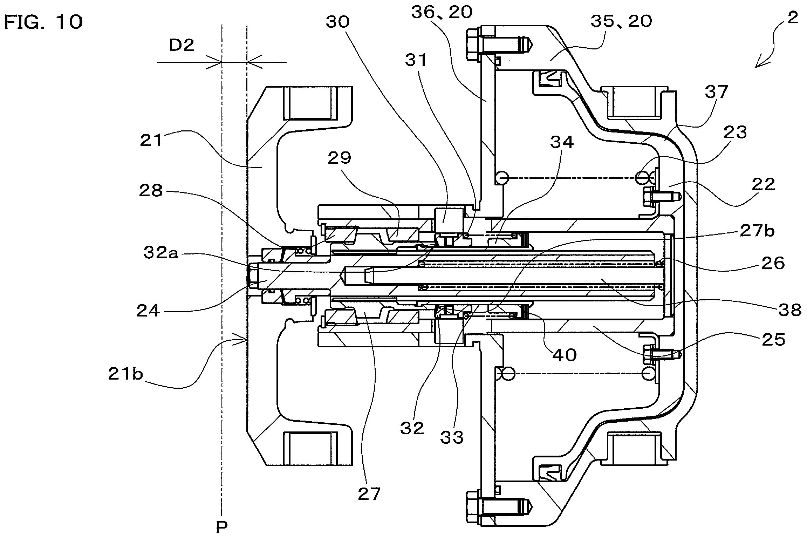

Next, the operation of the brake cylinder device 2 in the case of performing the automatic clearance adjustment by the clearance adjustment mechanism will be described with reference to FIGS. 10 to 17. The cross-sectional view of FIG. 10 shows a state before the braking operation is performed, or in other words a brake-released state. The distance D2 between the end 21b of the brake output portion 21 and the brake operating position P in this state is indicated by the arrows in the drawing. In the state shown in FIG. 10, the distance D2, which is the clearance from the end 21b of the brake output portion 21 up to the brake operating position P in the brake-released state, is increased, for example, as a result of wear of the brake pads 13. That is, in this state, the distance D2 is larger than the distance D1 (D2 > D1). In this case, as will be described below, the above-described clearance is automatically adjusted by the clearance adjustment mechanism composed of the clutch nut 27, the first clutch 29, the second clutch 32, the threaded shaft 24, the guide tube 25, the pusher spring 26, the front stopper 28, the adjustment stoppers 30, the adjustment spring 31, and so forth.

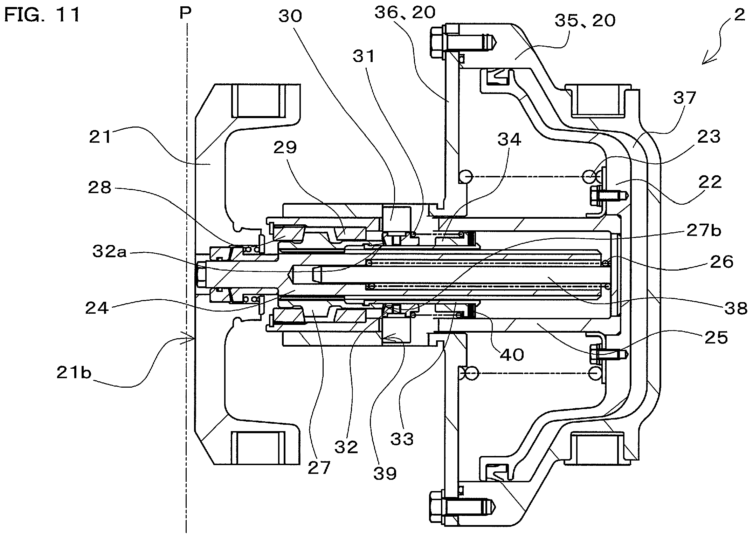

During the braking operation, first, a transition from the state shown in the cross-sectional view of FIG. 10 to the state shown in the cross-sectional view of FIG. 11 is made by supply of compressed air to the pressure chamber 37. That is, as compressed air is supplied to the pressure chamber 37, the piston 22 moves in the braking direction together with the guide tube 25 against the biasing force of the piston spring 23. Furthermore, the threaded shaft 24 moves in the braking direction together with the guide tube 25 and the pusher spring 26, and the spring receiver (spring stopper 34, bearing 40), the adjustment spring 31, the second clutch 32, and the adjustment stoppers 30 also move in the braking direction together with the adjustment sleeve 33 engaged with the clutch nut 27 threadably engaged with the threaded shaft 24. At this time, the teeth 32a on the second clutch 32 side and the teeth 27b on the clutch nut 27 side stay meshed and engaged with each other, and the state in which the second clutch 32 and the clutch nut 27 are in contact with each other is maintained. Then, as shown in the cross-sectional view of FIG. 11, the adjustment stoppers 30 fixed to the second clutch 32 come in contact with the ends of the stopper stroke restricting portions 39 in the braking direction. Consequently, the adjustment stoppers 30 reach their forward limit, and thereby the movement of the cylinder body 20 toward the front (in the braking direction) is restricted.

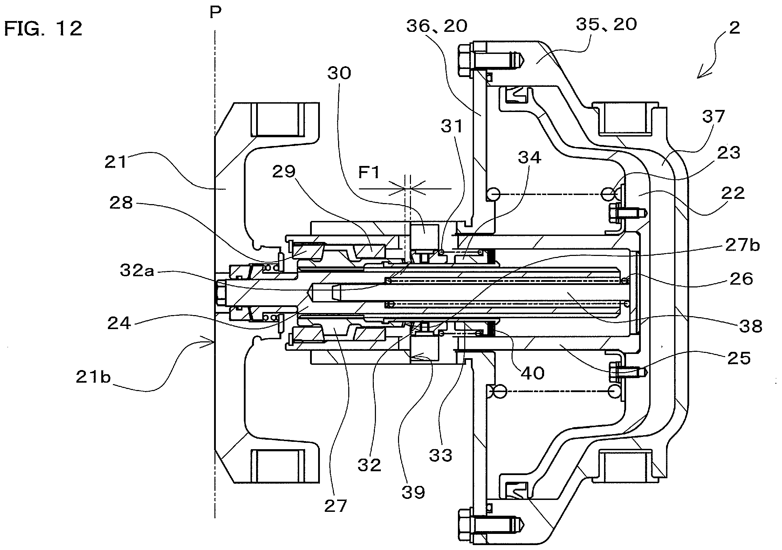

In the state shown in FIG. 11, the movement of the adjustment stoppers 30 and the second clutch 32 with respect to the cylinder body 20 is restricted, whereas the guide tube 25, the pusher spring 26, the threaded shaft 24, the clutch nut 27, the adjustment sleeve 33, the spring stopper 34, and the bearing 40 are in a state in which they are movable together with the piston 22. Also, the supply of compressed air to the pressure chamber 37 is further continued from the state shown in FIG. 11, and thereby the end 21b of the brake output portion 21 reaches the brake operating position P, resulting in a transition to the state shown in the cross-sectional view of FIG. 12. At this time, the adjustment spring 31 is compressed between the second clutch 32 to which the adjustment stoppers 30 are fixed and the spring stopper 34 disposed at the end of the adjustment sleeve 33 in the anti-braking direction along with the movement of the above-described components (24 to 27, 33, 34, 40).

During the transition from the state shown in FIG. 11 to the state shown in FIG. 12, the range of movement of the adjustment stoppers 30 is restricted, and thereby a force capable of biasing the clutch nut 27 in the anti-braking direction via the spring stopper 34, the bearing 40, and the adjustment sleeve 33 is accumulated in the adjustment spring 31 as the accumulated force of the adjustment spring 31. Then, as indicated by the arrows in FIG. 12, the clutch nut 27 integrated with the adjustment sleeve 33 moves by a distance F1 relative to the second clutch 32 to which the adjustment stoppers 30, whose range of movement is restricted by the cylinder body 20, are fixed. That is, the teeth 32a on the second clutch 32 side and the teeth 27b on the clutch nut 27 side are disengaged, the contact of the second clutch 32 with the clutch nut 27 is released, and a clearance of the distance F1 is formed between the second clutch 32 and the clutch nut 27. The adjustment spring 31 is compressed by a dimension equal to the distance F1 (the dimension F1), and the accumulated force of the adjustment spring 31 is stored.

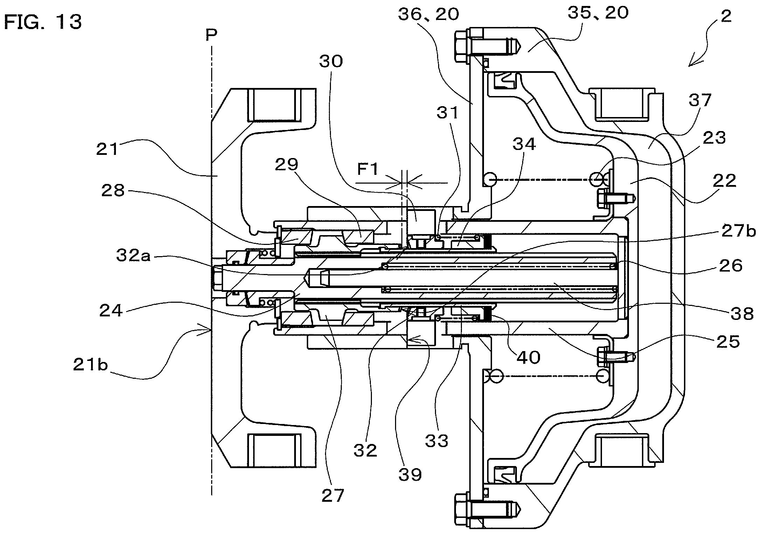

The state shown in FIG. 12 is a state at an instant when the pair of brake pads (13, 13) have come into contact with the brake disc 101 as a result of the end 21b of the brake output portion 21 having reached the brake operating position P, and no braking force has been generated in this state. In this state, the movement, in the braking direction, of the threaded shaft 24 and the clutch nut 27 threadably engaged therewith is constrained. Then, the supply of compressed air to the pressure chamber 37 is further continued from the state shown in FIG. 12, and thereby, as shown in the cross-sectional view of FIG. 13, the guide tube 25 moves in the braking direction together with the piston 22, which causes the front stopper 28 and the first clutch 29 to move toward the front (in the braking direction) together with the guide tube 25. Consequently, the front stopper 28 that has been in contact with the clutch nut 27 is spaced apart from the clutch nut 27, and the first clutch 29 that has been spaced apart from the clutch nut 27 is in contact with the clutch nut 27. Upon reaching the state shown in FIG. 13, the pair of brake pads (13, 13) press the brake disc 101, and braking force is output. Also, in this state, the accumulated force of the adjustment spring 31 corresponding to the compressed dimension of the dimension F1 shown in FIG. 11 is maintained as it is.

Note that although the present embodiment will be described as below, taking, as an example, a mode in which the clearance adjustment operation is performed only during the brake releasing operation, this need not be the case. In the middle of the transition process of the brake cylinder device 2 from the state shown in FIG. 12 to the state shown in FIG. 13, while the state is occurring in which the clutch nut 27 is spaced apart from both the front stopper 28 and the first clutch 29, the clearance adjustment operation may be performed as a result of the clutch nut 27 spaced apart also from the second clutch 32 rotating and moving with respect to the threaded shaft 24 due to the accumulated force of the adjustment spring 31.

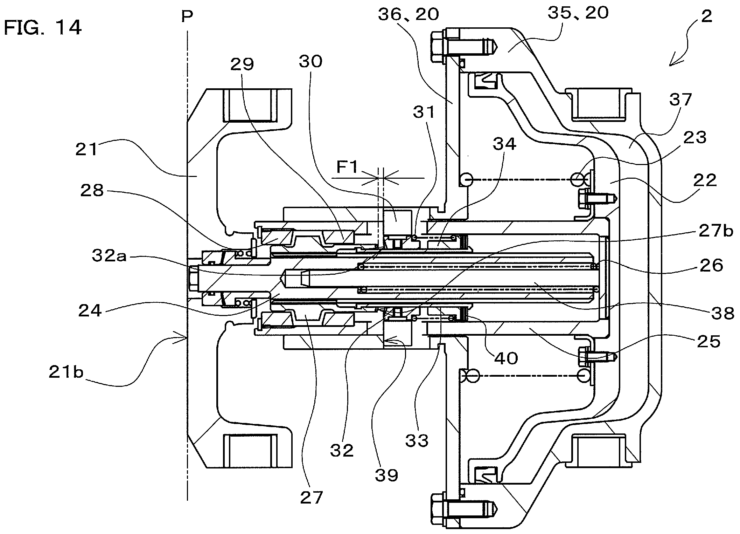

On the other hand, during the brake releasing operation, the compressed air is discharged from the pressure chamber 37. Upon the compressed air being discharged from the pressure chamber 37, the piston 22 starts moving in the anti-braking direction together with the guide tube 25 by the biasing force of the piston spring 23. Then, the front stopper 28 and the first clutch 29 also start moving to the rear (in the anti-braking direction) together with the guide tube 25. At this time, although the clutch nut 27 undergoes a transition to the state in which it is spaced apart from the first clutch 29 and is in contact with the front stopper 28, the threaded shaft 24 is biased in the braking direction by the pusher spring 26. Accordingly, as shown in the cross-sectional view of FIG. 14, the threaded shaft 24 and the brake output portion 21 do not move in the anti-braking direction, resulting in a state in which the clutch nut 27 is biased in the anti-braking direction by the accumulated force corresponding to the dimension F1 of the adjustment spring 31. At this time, a state occurs in which the contact of the clutch nut 27 with the first clutch 29 is released and the clutch nut 27 is not in contact with the front stopper 28, and further, the clutch nut 27, which is not in contact with the second clutch 32 either, becomes rotatable with respect to the threaded shaft 24 in this state.

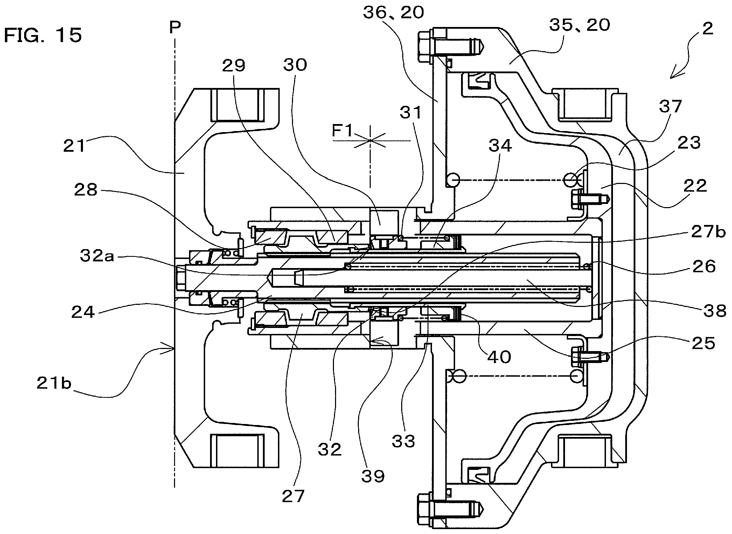

In the state in which the clutch nut 27 is not in contact with the front stopper 28, the first clutch 29, or the second clutch 32, and thus is rotatable with respect to the threaded shaft 24 as described above, the accumulated force of the adjustment spring 31 that corresponds to the dimension F1 of the adjustment spring 31 causes the clutch nut 27 to rotate with respect to the threaded shaft 24 so as to move in the anti-braking direction. Thus, rotation of the clutch nut 27 with respect to the threaded shaft 24 reduces the dimension F1 shown in FIG. 14. Also, as shown in FIG. 15, the state in which the clutch nut 27 is not in contact with the front stopper 28, the first clutch 29, or the second clutch 32 and thus rotates with respect to the threaded shaft 24 is continued until the clearance between the clutch nut 27 and the second clutch 32 is lost, the clutch nut 27 and the second clutch 32 come in contact with each other, and the dimension F1 becomes zero. As a result of the dimension F1 thus becoming zero, the clutch nut 27 becomes unrotatable. Note that the rotation of the clutch nut 27 performed until the dimension F1 becomes zero does not necessarily be completed during the time in which the braking operation and the brake releasing operation are performed once, but may be completed during the time in which the braking operation and the brake releasing operation are performed multiple times.

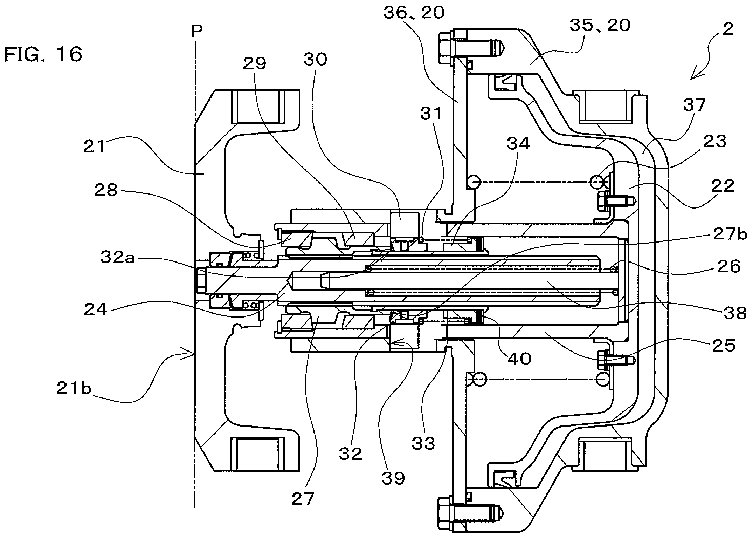

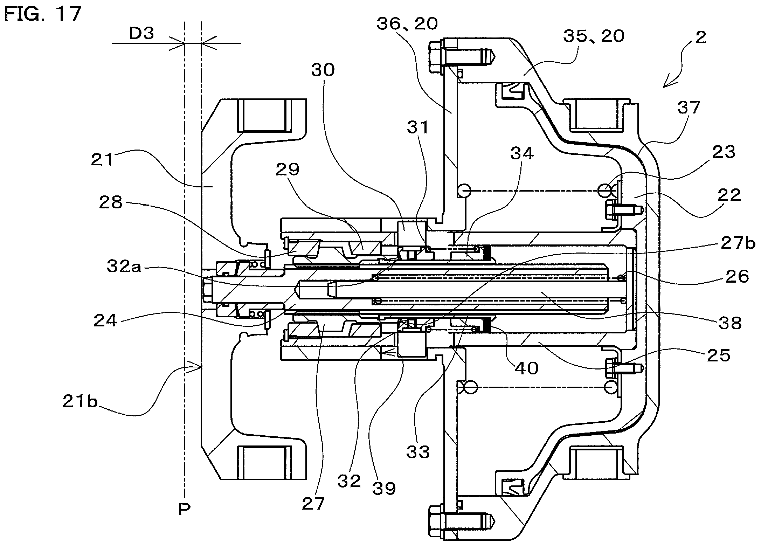

The discharge of the compressed air from the pressure chamber 37 is further continued from the state shown in FIG. 15, and thereby the piston 22, the guide tube 25, and the front stopper 28 move further in the anti-braking direction. Then, as shown in the cross-sectional view of FIG. 16, the front stopper 28 comes into contact with the clutch nut 27. Furthermore, as a result of the movement of the guide tube 25 in the anti-braking direction, the clutch nut 27 in contact with the front stopper 28 and the threaded shaft 24 threadably engaged with the clutch nut 27 also move in the anti-braking direction. Consequently, the brake output portion 21 also moves in the anti-braking direction, and a brake-released state is achieved as shown in FIG. 17.

Then, in the brake-released state shown in FIG. 17, compared to the state before the braking operation and the brake releasing operation are performed, the distance between the end 21b of the brake output portion 21 and the brake operating position P changes to a distance D3, which is a distance smaller than the distance D2 (D3 < D2). That is, the clutch nut 27 moves relative to the threaded shaft 24 in the anti-braking direction in the middle of the brake releasing operation, and therefore, the brake releasing operation ends in a state in which the position of the threaded shaft 24 has moved further in the braking direction than in the state before the brake releasing operation. Then, a transition is made to a state in which the threaded shaft 24 and the brake output portion 21 have moved to positions projecting toward the cylinder body 20, as compared to the state before the braking operation and the brake releasing operation. Consequently, the clearance up to the brake operating position P in the brake-released state is automatically adjusted.

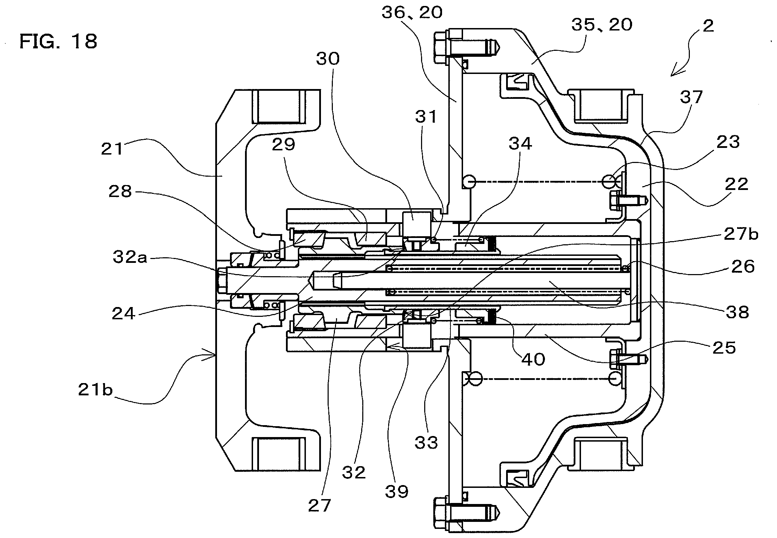

Next, with reference to FIGS. 18 to 21, a description will be given of the operation of the brake cylinder device 2 in the case of forcibly performing the clearance adjustment operation in a state in which the brake pads 13 do not come into contact with the brake disc 101 and braking force is not generated with a conventional clearance adjustment operation, or in the so-called idling state (note that the clearance adjustment is performed using the force generated by the brake pads 13 coming into contact with the brake disc 101, and the clearance adjustment cannot be performed without such contact). The cross-sectional view of FIG. 18 shows a state before the compressed air is supplied to the compression chamber 37 in the above-described idling state (i.e., a state corresponding to the above-described brake-released state). For example, the drawing shows a state after the replacement of the brake pads 13 of the disc brake device 1 has been performed and in which the clearance adjustment operation is about to be performed.

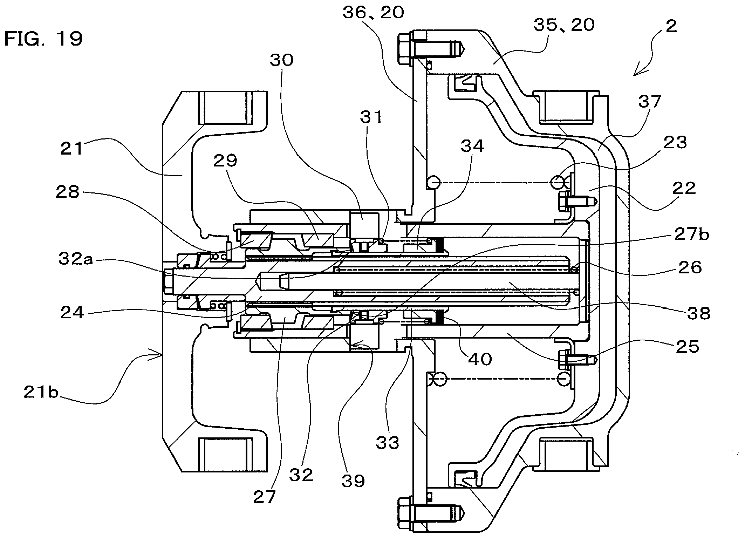

In the above case, first, a transition from the state shown in the cross-sectional view of FIG. 18 to the state shown in the cross-sectional view of FIG. 19 is made by supply of compressed air to the pressure chamber 37. That is, as compressed air is supplied to the pressure chamber 37, the piston 22 moves in the braking direction together with the guide tube 25 against the biasing force of the piston spring 23. Furthermore, the threaded shaft 24 moves in the braking direction together with the guide tube 25 and the pusher spring 26, and the second clutch 32, the adjustment stoppers 30, and the adjustment spring 31 also move in the braking direction together with the adjustment sleeve 33 engaged with the clutch nut 27 threadably engaged with the threaded shaft 24. Then, as shown in the cross-sectional view of FIG. 19, the adjustment stoppers 30 fixed to the second clutch 32 come into contact with the end of the stroke restricting portions 39 in the braking direction. Consequently, the adjustment stoppers 30 reach their forward limit, and thereby their movement with respect to the cylinder body 20 toward the front (in the braking direction) is restricted.

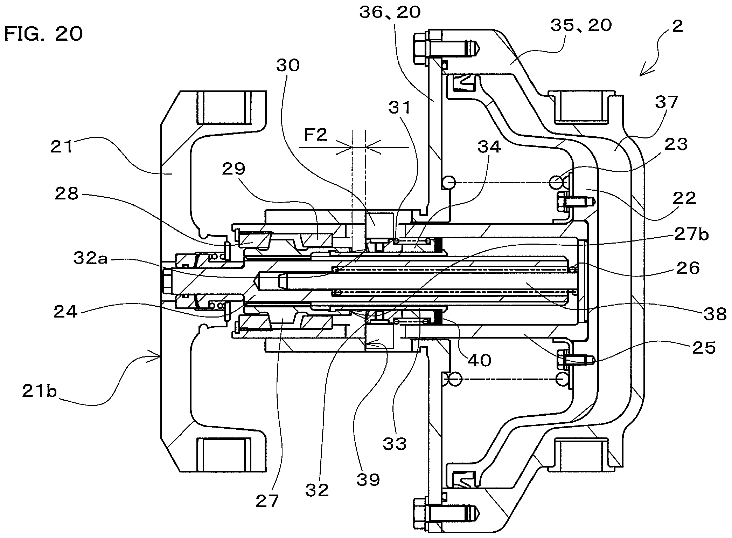

In the state shown in FIG. 19, the movement of the adjustment stoppers 30 and the second clutch 32 with respect to the cylinder body 20 is restricted, whereas predetermined components such as the threaded shaft 24 (24 to 27, 33, 34, 40) are in a state in which they are movable together with the piston 22. Also, the supply of compressed air to the pressure chamber 37 is further continued from the state shown in FIG. 19, and thereby the adjustment spring 31 is compressed between the second clutch 32 to which the adjustment stoppers 30 are fixed and the spring stopper 34 disposed at the end of the adjustment sleeve 33 in the anti-braking direction along with the movement of the above-described components (24 to 27, 33, 34, 40). Then, the end of the spring stopper 34 in the braking direction comes into contact with the end of the second clutch 32 in the anti-braking direction, resulting in a transition to the state shown in the cross-sectional view of FIG. 20.

In the state shown in FIG. 20, a force capable of biasing the clutch nut 27 in the anti-braking direction via the spring stopper 34, the bearing 40, and the adjustment sleeve 33 is accumulated in the adjustment spring 31 as the accumulated force of the adjustment spring 31. At this time, as indicated by the arrows in FIG. 20, the clutch nut 27 integrated with the adjustment sleeve 33 moves by a distance F2 relative to the second clutch 32 to which the adjustment stoppers 30 are fixed whose range of movement is restricted by the cylinder body 20. The adjustment spring 31 is compressed by a dimension equal to the distance F2 (the dimension F2), and the accumulated force of the adjustment spring 31 is stored.

As shown in FIG. 20, in the state in which the movement of the adjustment stoppers 30 is restricted and the second clutch 32 to which the adjustment stoppers 30 are fixed is in contact with the spring stopper 34, the adjustment sleeve 33 whose end in the anti-braking direction engaged with the bearing 40 in contact with the spring stopper 34 can no longer move to the front (in the braking direction). Accordingly, the clutch nut 27 engaged with the adjustment sleeve 33 can no longer move in the braking direction either, and the clutch nut 27 can no longer move in the braking direction together with the piston 22, the guide tube 25, the pusher spring 26, and the threaded shaft 24.

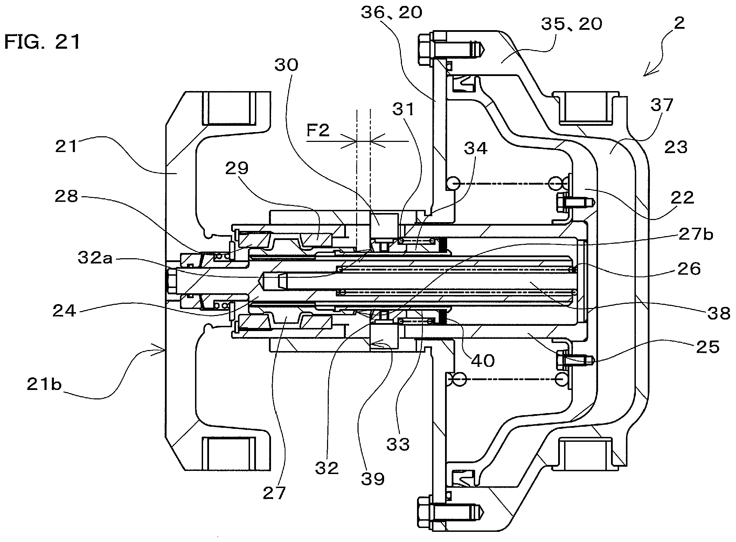

However, because the brake pad 13 does not come in contact with the brake disc 101, the supply of the compressed air to the pressure chamber 37 is further continued from the state shown in FIG. 20, resulting in further movement in the braking direction of the piston 22, the guide tube 25, the front stopper 28, the first clutch 29, the pusher spring 26, and the pusher spring guide 38. Thereby, a state occurs in which the clutch nut 27 is spaced apart from the front stopper 28, and remains spaced apart from and is not in contact with the first clutch 29 as well, as shown in the cross-sectional view of FIG. 21. Therefore, a state is achieved in which the clutch nut 27 is in contact with none of the front stopper 28, the first clutch 29, and the second clutch 32, and is rotatable with respect to the threaded shaft 24. At this time, the threaded shaft 24 is biased by the pusher spring 26, and therefore the clutch nut 27 rotates with respect to the threaded shaft 24 by the biasing force of the pusher spring 26. Consequently, the threaded shaft 24 moves and protrudes relative to the clutch nut 27 in the braking direction. Then, upon the brake pad 13 coming in contact with the brake disc 101, movement of the threaded shaft 24 due to the biasing force of the pusher spring 26 stops, and the rotation of the clutch nut 27 with respect to the threaded shaft 24 stops. Note that even in the case where the brake pad 13 does not come in contact with the brake disc 101, the rotation of the clutch nut 27 with respect to the threaded shaft 24 by the biasing force of the pusher spring 26 stops if the pusher spring 26 extends and the biasing force of the pusher spring 26 becomes sufficiently small.

As described above, even in the state in which the rotation of the clutch nut 27 with respect to the threaded shaft 24 by the biasing force of the pusher spring 26 stops, the clutch nut 27 is in contact with none of the front stopper 28, the first clutch 29, and the second clutch 32, and is rotatable with respect to the threaded shaft 24. Therefore, the clutch nut 27 is biased by the accumulated force stored in the adjustment spring 31, and rotates with respect to the threaded shaft 24 so as to move in the anti-braking direction. Thus, the clutch nut 27, by rotating with respect to the threaded shaft 24, comes in contact with the first clutch 29. In this state, the clearance adjustment mechanism is in a state similar to the state shown in the cross-sectional view of FIG. 13, that is, a state similar to the state in which braking force has been output in the case where the automatic clearance adjustment by the clearance adjustment mechanism is performed. In this state, an operation corresponding to the braking operation ends. Then, after the operation corresponding to the braking operation ends, the compressed air is discharged from the pressure chamber 37, and an operation corresponding to the brake releasing operation is performed in a manner similar to the brake releasing operation illustrated in FIGS. 14 to 16. As a result of the operation corresponding to the brake releasing operation, an operation similar to the the clearance adjustment operation illustrated in FIGS. 14 to 16 is performed by the clearance adjustment mechanism. Also, the state in which the operation similar to the clearance adjustment operation is performed, that is, the state in which the clutch nut 27 is in contact with none of the front stopper 28, the first clutch 29, and the second clutch 32 and thus rotates with respect to the threaded shaft 24 is continued until the clearance between the clutch nut 27 and the second clutch 32 is lost and the clutch nut 27 and the second clutch 32 come in contact with each other. Note that the rotation of the clutch nut 27 performed until the clutch nut 27 and the second clutch 32 come in contact with each other is not necessarily completed during the time in which the operations corresponding to the braking operation and the brake releasing operation are performed once, but may be completed during the time in which the operations corresponding to the braking operation and the brake releasing operation are performed multiple times.

Thus, in the idling state as well, the clutch nut 27 moves relative to the threaded shaft 24 in the anti-braking direction as a result of the operation corresponding to the braking operation and the operation corresponding to the brake releasing operation being performed, and therefore, these operations end in a state in which the position of the threaded shaft 24 has moved further in the braking direction than in the state before the operation corresponding to the braking operation and the operation corresponding to the brake releasing operation are performed. Then, a transition is made to a state in which the threaded shaft 24 and the brake output portion 21 have moved to positions projecting toward the cylinder body 20, as compared to the state before the operation corresponding to the braking operation and the operation corresponding to the brake releasing operation are performed. Consequently, the clearance up to the brake operating position P in the brake-released state has been automatically adjusted when the maintenance operation such as the replacement of the brake pads 13 has ended and a transition has been made from the idling state to the state in which the brake is operable.

As described thus far, with the brake cylinder device 2, the clearance adjustment mechanism is composed of the clutch nut 27, the first clutch 29, the second clutch 32, the threaded shaft 24, the guide tube 25, the pusher spring 26, the front stopper 28, the adjustment stoppers 30, the adjustment spring 31, and so forth. Accordingly, the clearance adjustment is not performed using elastic deformation of rubber or the like, and it is therefore possible to achieve a configuration that is less likely to be affected by the surrounding environment such as temperature and humidity. Also, it is not necessary to provide the bearing in the structure for attaching the guide tube 25 to the piston 22, which makes it possible to reduce the radial dimension of the cylinder body 20 on the rear side (the end in the anti-braking direction).

Therefore, according to the present embodiment, for the brake cylinder device 2 including the clearance adjustment mechanism for automatically adjusting the clearance up to the brake operating position P in the brake-released state, it is possible to provide a configuration that is less likely to be affected by the surrounding environment such as temperature and humidity at low cost, and also achieve a reduction in the radial dimension of the cylinder body 20.

Furthermore, with the brake cylinder device 2, in the state in which the automatic clearance adjustment operation by the clearance adjustment mechanism is not performed, the state in which the second clutch 32 and the clutch nut 27 are in contact with each other is maintained regardless of whether it is during the braking operation or when the brake is released, and the contact of the second clutch 32 with the clutch nut 27 is prevented from being released. In other words, in the state in which the clearance adjustment operation is not performed, the clutch nut 27 is biased in the anti-braking direction by the adjustment spring 31 in contact at the first end thereof with the second clutch 32, and thereby the state in which the second clutch 32 and the clutch nut 27 are in contact with each other is maintained. Consequently, the clutch nut 27 is prevented from rotating with respect to the threaded shaft 24 at any time other than during the clearance adjustment operation, and the position of the clutch nut 27 with respect to the threaded shaft 24 is prevented from shifting due to vibration or the like.

Note that if the position of the clutch nut 27 with respect to the threaded shaft 24 shifts due to vibration or the like, a state occurs in which the brake output portion 21 excessively protrudes in the braking direction toward the cylinder body 20, or in which protrusion of the brake output portion 21 in the braking direction toward the cylinder body 20 is insufficient. In the state in which the position of the clutch nut 27 with respect to the threaded shaft 24 shifts and the brake output portion 21 excessively protrudes in the braking direction toward the cylinder body 20, that is, in the state in which excessive clearance adjustment has been performed, a state occurs in which the brake pad 13 is in constant contact with, and is rubbed against, the brake disc 101. In this case, it is likely that wear of the brake pad 13 is promoted, and the replacement cycle of the brake pad 13 is shortened. On the other hand, in the state in which the position of the clutch nut 27 with respect to the threaded shaft 24 shifts and the protrusion of the brake output portion 21 in the braking direction toward the cylinder body 20 is insufficient, that is, in the state in which the clearance adjustment is insufficient, the timing of braking force generation during the braking operation is delayed even in a situation in which the clearance adjustment is originally not necessary.

However, with the brake cylinder device 2, the clutch nut 27 is prevented from rotating with respect to the threaded shaft 24 at any time other than during the clearance adjustment operation, and the position of the clutch nut 27 with respect to the threaded shaft 24 is prevented from shifting due to vibration or the like, as described above. Therefore, it is possible to prevent occurrence of an event in which wear of the brake pad 13 is promoted and the replacement cycle of the brake pad 13 is shortened, and an event in which the timing of braking force generation during the braking operation is delayed even in the situation in which the clearance adjustment is originally not necessary.

With the brake cylinder device 2, the pusher spring 26 that biases the threaded shaft 24 is disposed inside the threaded shaft 24 having a hollow structure, and is configured to bias the clutch nut 27 threadably engaged with the threaded shaft 24 toward the front stopper 28. Accordingly, the pusher spring 26 can be disposed by efficiently using the space in the brake cylinder device 2. This can increase the space efficiency in the brake cylinder device 2, which makes it possible to realize a further size reduction.

With the brake cylinder device 2, the pusher spring guide 38 is provided that extends inside the coil-shaped pusher spring 26 and restricts the deformation of the pusher spring 26 in the buckling direction. Accordingly, the dimension of the clearance to be adjusted by the clearance adjustment mechanism is increased, and therefore, the buckling of the pusher spring 26 can be efficiently prevented even if a long pusher spring 26 is required. Further, the pusher spring guide 38 provided so as to be movable together with the guide tube 25 is disposed such that its tip is slidable on the inside of the threaded shaft 24. Accordingly, it is possible, with a simple configuration of providing the shaft-like pusher spring guide 38, to readily achieve a structure that maintains the positional relationship between the threaded shaft 24 and the piston 22 such that they are displaced coaxially.

With the brake cylinder device 2, the front stopper 28 and the first clutch 29 are provided as separate unitary members and are separately fixed to the guide tube 25. Accordingly, it is not necessary to provide each of the front stopper 28 and the first clutch 29 disposed at the front and the rear, respectively, of the clutch nut 27 as a divided structure and perform coupling with additional coupling means. Likewise, it is not necessary to provide the clutch nut 27 at the front and the rear of which the front stopper 28 and the first clutch 29 are disposed as a divided structure and perform coupling with additional coupling means. This can simplify the configuration for the front stopper 28, the first clutch 29, and the clutch nut 27, and consequently, the size and the weight of the brake cylinder device 2 as a whole can be reduced. Furthermore, due to the configuration in which the front stopper 28 and the first clutch 29 are separate unitary members and are fixed to the guide tube 25, it is possible to set the dimensional configuration such that the inner circumferences of the front stopper 28 and the first clutch 29 are located closer to the outer circumference of the threaded shaft 24, which makes it possible to realize a further size reduction for the brake cylinder device 2.

With the brake cylinder device 2, the front stopper 28 provided as a separate unitary member is fixed to the inner circumference of the guide tube 25 by threaded coupling. Accordingly, the front stopper 28 can be readily replaced at the time of maintenance, which makes it possible to increase the ease of maintenance.

With the brake cylinder device 2, the adjustment spring 31 is disposed between the tubular adjustment sleeve 33 disposed around the threaded shaft 24 and the second clutch 32 to which the adjustment stoppers 30 are fixed, and a force for moving the clutch nut 27 relative to the threaded shaft 24 in the anti-braking direction is accumulated during the clearance adjustment operation along with the relative movement of the adjustment sleeve 33 with respect to the adjustment stoppers 30 and the second clutch 32. Also, the adjustment sleeve 33 is provided as a member having flexibility, and the adjustment sleeve 33 and the clutch nut 27 are integrated by engagement of the engaging portion 33a on the adjustment sleeve 33 side and the engaged portion 27c on the clutch nut 27 side. Accordingly, the engaging portion 33a can be engaged with the engaged portion 27c by temporarily causing the adjustment sleeve 33 having flexibility to be elastically deformed, and therefore, the adjustment sleeve 33 and the clutch nut 27 can be integrated without using any additional fastening member. Thus, the structure for integrating the adjustment sleeve 33 and the clutch nut 27 does not require any additional fastening member, and it is therefore possible to achieve a further size reduction for the brake cylinder device 2.

With the brake cylinder device 2, the adjustment sleeve 33 is configured to engage from inside of the clutch nut 27, and the dimension of the clearance between the inner circumference of the adjustment sleeve 33 and the top of the ridge of the thread 24a of the threaded shaft 24 is set to be smaller than the radial dimension of the indented portions of the engaging portion 33a and the engaged portion 27c that are fitted together (the length, in the radial direction of the adjustment sleeve 33, of overlap of the indented portions). Accordingly, the engaging portion 33a of the adjustment sleeve 33 having flexibility is disposed between the clutch nut 27 and the threaded shaft 24 that are formed of a metallic material, and, moreover, a dimensional relationship is set that can prevent disengagement of the engaging portion 33a of the adjustment sleeve 33 from the engaged portion 27c caused by deformation toward the threaded shaft 24. This makes it possible to firmly integrate the adjustment sleeve 33 and the clutch nut 27 even though the engagement configuration is simple.

With the brake cylinder device 2, the second end of the adjustment spring 31 biases the adjustment sleeve 33 via the bearing 40, and therefore, when the adjustment sleeve 33 is biased by the accumulated force of the adjustment spring 31, the clutch nut 27 smoothly rotates together with the adjustment sleeve 33 and moves in the braking direction. Also, the bearing 40 of the spring receiver is disposed such that the clearance to the guide tube 25 is substantially zero, or is disposed so as to be in sliding contact with the guide tube 25, and therefore, the threaded shaft 24 can be supported to the guide tube 25 via the bearing 40 of the spring receiver, which makes it possible to prevent the threaded shaft 24 from being tilted with respect to the guide tube 25.

With the brake cylinder device 2, the spring stopper 34 is provided that restricts, to a predetermined amount or less, the amount of displacement of the adjustment spring 31 during the elastic deformation of the adjustment spring 31 such that the force for the clearance adjustment operation is accumulated. Accordingly, even if the clearance adjustment operation is forcibly performed in an operation in the idling state that does not generate braking force with a conventional clearance adjustment operation, the stroke of the adjustment spring 31 is restricted by the spring stopper 34. Accordingly, the adjustment spring 31 will not be excessively compressed or extended, and the clearance adjustment operation can be performed forcibly even in the idling state.

With the brake cylinder device 2, it is possible to forcibly perform the clearance adjustment operation even in the idling state as described above. Accordingly, by repeating operations corresponding to the braking operation and the brake releasing operation multiple times for the entire vehicle or the entire group of vehicles at once, the clearance is automatically adjusted in all brake cylinder devices 2. Thereby, when the brake pads 13 have been replaced, it is possible to automatically perform the clearance adjustment on all brake cylinder devices 2 in a vehicle or a group of vehicles at once, without the need to manually perform the clearance adjustment on brake cylinder devices 2 one by one. Accordingly, it is possible to significantly reduce the number of steps and time and effort in the operation associated with the replacement of brake pads 13, which makes it possible to considerably promote the efficiency.

With the brake cylinder device 2, in a state in which the clearance adjustment operation is not performed and the contact of the clutch nut 27 with the second clutch 32 is maintained, the clutch nut 27 and the second clutch 32 engage with each other via the teeth (27b, 32a) formed on the mutually facing surfaces, and it is therefore possible to reliably prevent the clutch nut 27 from rotating with respect to the threaded shaft 24 due to vibrations or the like. Note that the clutch nut 27 and the second clutch 32 engage with each other via the teeth (27b, 32a), and it is therefore possible to reliably prevent the clutch nut 27 from rotating with respect to the threaded shaft 24 even if the engagement is made in a state in which only the tips of the teeth (27b, 32a) are meshed.

With the brake cylinder device 2, the hexagon head portion 24c serving as the operation engaging portion is provided at the tip disposed so as to pass through the brake output portion 21 and face outward, and the threaded shaft 24 and the brake output portion 21 are engaged with each other by the engagement mechanism 42 disposed on the outer circumference of the threaded shaft 24 at the tip. Further, the engagement mechanism 42 includes the engaging spring 44 and the outer circumferential engaging portion 43 having the engaging teeth 43a, and the threaded shaft 24 and the brake output portion 21 are configured to engage with each other via the engaging teeth 43a by the engaging spring 44 biasing the outer circumferential engaging portion 43 in the braking direction. Accordingly, by releasing the engagement of the outer circumferential engaging portion 43 with the brake output portion 21 via the engaging teeth 43a against the spring force of the engaging spring 44 to release the engagement of the threaded shaft 24 with the brake output portion 21 and further rotating the threaded shaft 24 with an operation tool, the threaded shaft 24 can be rotated manually. Thus the positional relationship between the threaded shaft 24 and the clutch nut 27 can be readily brought back into the initial state, which is the state before the clearance adjustment is performed.

According to this embodiment, for the disc brake device 1 provided with the brake cylinder device 2 including the clearance adjustment mechanism for automatically adjusting the clearance up to the brake operating position P in the brake-released state, it is possible to provide a configuration that is less likely to be affected by the surrounding environment such as temperature and humidity at low cost, and also achieve a reduction in the radial dimension of the cylinder body 20.

### Second Embodiment

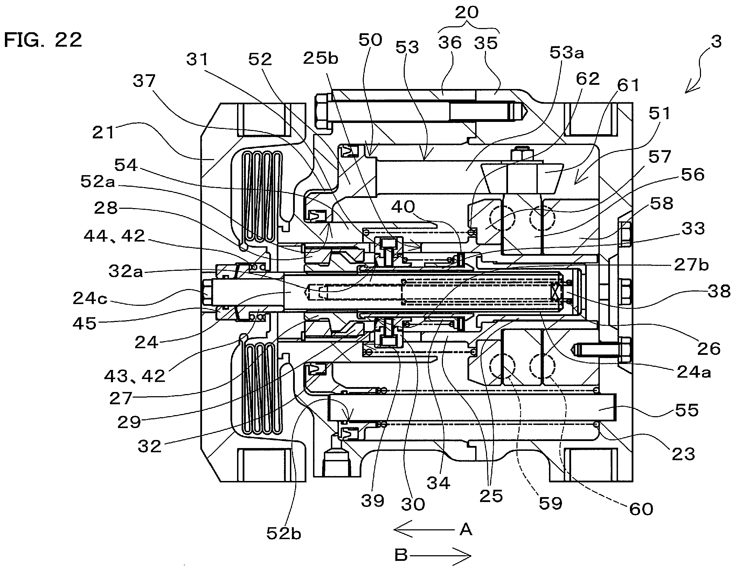

Next, a brake cylinder device 3 according to a second embodiment of the present invention will be described. FIG. 22 is a cross-sectional view of a brake cylinder device 3 according to the second embodiment. As with the brake cylinder device 2 of the first embodiment, the brake cylinder device 3 shown in FIG. 22 is provided as a brake cylinder device with which the disc brake device 1 is equipped. Note that FIG. 22 shows the outer shape, rather than the cross section, of some of the components of the brake cylinder device 3.

As with the brake cylinder device 2 of the first embodiment, the brake cylinder device 3 includes a cylinder body 20, a brake output portion 21, a piston 50, piston springs 23, a threaded shaft 24, a guide tube 25, a pusher spring 26, a clutch nut 27, a front stopper 28, a first clutch 29, adjustment stoppers 30, an adjustment spring 31, a second clutch 32, an adjustment sleeve 33, a spring stopper 34, a pusher spring guide 38, a bearing 40, an engagement mechanism 42, and so forth. Of the above-described components, those other than the adjustment sleeve 33 are formed of, for example, a metallic material such as an iron-based material, and the adjustment sleeve 33 is formed of, for example, a resin material.

As described above, the brake cylinder device 3 is configured in the same manner as the brake cylinder device 2 of the first embodiment. However, the brake cylinder device 3 is different from the brake cylinder device 2 of the first embodiment in that a force amplifying mechanism 51 is further provided and that the direction of movement of the piston 50 is configured such that the piston 50 moves in the direction opposite to the direction of movement of the piston 22 of the first embodiment. Note that in the following description of the brake cylinder device 3, a description will only be given of configurations that are different from those of the first embodiment. Those elements configured to have the same functions as in the first embodiment are denoted by identical reference numerals in the drawings, and the description thereof has been omitted.

The piston 50 includes a disc-like portion 52 and a pair of plate-like portions 53 (only one of the plate-like portions 53 is shown in FIG. 22) that project from the disc-like portion 52 parallel to the threaded shaft 24 and the guide tube 25 in the anti-braking direction (the direction indicated by the arrow B in FIG. 22). Additionally, the second casing portion 36 of the cylinder 20 is provided with a cylinder portion 54 extending toward the first casing portion 35 side (i.e., the anti-braking direction) thereinside. Also, the disc-like portion 52 has a through hole 52a formed at the center, and the cylinder portion 54 of the cylinder body 20 passes through the through hole 52a. Thereby, the piston 50 is disposed between the outer circumferential face of the cylinder portion 54 and the inner circumferential face of the second casing 36. That is, the piston 50 is disposed so as to partition the space between the outer circumferential face of the cylinder portion 54 and the inner circumferential face of the second casing portion 36 into two, and is configured to be movable relative to the cylinder body 20 along the axial direction. Also, the pressure chamber 37 is defined between the piston 50 and the second casing portion 36.

Note that cylinder body 20 is provided with a pair of guide shafts 55 (only one of the guide shafts 55 is shown in FIG. 22) extending parallel to the axial direction of the threaded shaft 24 and the guide tube 25. Also, the disc-like portion 52 of the piston 50 is provided with guide apertures 52b through which the guide shafts 55 pass. Further, the piston springs 23 for biasing the piston 50 toward the brake output portion 21 side (i.e., toward the braking direction, which is the direction indicated by the arrow A in FIG. 22) are disposed around the guide shafts 55.

The plate-like portions 53 of the piston 50 are each provided with an inclined surface 53a that is inclined in a spiral fashion with respect to the direction of the central axis of the threaded shaft 24 and the guide tube 25 and the circumferential direction about the central axis. Note that rollers 61 rotatably attached to a pivot member 56, which will be described below, are disposed so as to come into contact with the inclined surfaces 53a of the plate-like portions 53.

The force amplifying mechanism 51 is provided as a mechanism for amplifying the force generated in the piston 50 and exerting the force on the guide tube 25 such that the guide tube 25, the pusher spring 26, the threaded shaft 24, and so forth are moved in the braking direction (the direction indicated by the arrow A in FIG. 22), which is opposite to the direction of movement of the piston 50, when the piston 50 moves in the anti-braking direction. That is, when the piston 50 moves in the anti-braking direction inside the cylinder body 20 as a result of supply of compressed air to the pressure chamber 37, the force amplified by the force amplifying mechanism 51 acts on the guide tube 25 attached to the force amplifying mechanism 51, and the guide tube 25, the pusher spring 26, the threaded shaft 24, and the like move in the braking direction. Accordingly, the brake output portion 21 connected to the threaded shaft 24 moves in the braking direction via the force amplifying mechanism 51 that amplifies the force generated in the piston 50 with the movement of the piston 50 in the anti-braking direction.

The force amplifying mechanism 51 includes the above-described inclined surfaces 53a provided in the piston 50, the pivot member 56, a first receiving member 57, a second receiving member 58, a first rolling member 59, a second rolling member 60, and so forth.

The pivot member 56 is provided as a disc-like member that pivots about the central axis of the threaded shaft 24 and the guide tube 25 in a predetermined direction of rotation, and has a through hole formed at the center. Also, the pivot member 56 is configured to be biased by the inclined surfaces 53a of the piston 50 when the piston 50 has moved in the anti-braking direction, and to pivot about the central axis of the threaded shaft 24 and the guide tube 25 in the above-described predetermined direction of rotation. Note that the threaded shaft 24 and the guide tube 25 are provided so as not to pivot about the central axis with respect to the cylinder body 20, and are configured to move in the braking direction along with the pivoting of the pivot member 56 in the above-described predetermined direction of rotation. Further, the pivot member 56 is provided with a pair of shaft portions projecting radially outward from the outer circumferential face of the disc-like portion, and rollers 61 coming into contact with the inclined surfaces 53a of the piston 50 on their outer circumferential faces are rotatably attached to the shaft portions.

The first receiving member 57 is provided as a disc-like member having a through hole formed at the center, is disposed about the central axis of the threaded shaft 24 and the guide tube 25, and is fixed to the outer circumference of the guide tube 25. Also, the first receiving member 57 is disposed so as to face the pivot member 56 on the braking direction side in a direction parallel to the direction of the central axis of the threaded shaft 24 and the guide tube 25.

Further, the surface of the pivot member 56 that faces the first receiving member 57 is provided with first inclined grooves (not shown) that are formed such that the depth thereof changes in inclination with respect to the pivoting direction of the pivot member 56. Also, first rolling members 59 (indicated by the dashed line in FIG. 22) capable of rolling along the inner surface of the first inclined grooves are disposed in the first inclined grooves. The first rolling members 59 are provided as spherical members, and are supported in a state of being sandwiched by the first receiving member 57 and the pivot member 56. A plurality of the above-described first inclined grooves and first rolling members 59 are provided so as to be positioned along the circumference of a circle about the central axis of the threaded shaft 24 and the guide tube 25. Note that a spring 62 is disposed between a stepped portion formed on the inner circumference of the end of the first receiving member 57 in the braking direction and a stepped portion formed on the inner wall of the cylinder portion 54 of the second casing portion 36. The spring 62 biases the first receiving member 57 in the anti-braking direction. Further, in the cylinder body 20 of the brake cylinder device 3, a portion of the cylinder portion 54 that forms a stepped portion coming into contact with the spring 62 is configured to also serve the function of the stopper stroke restricting portions 39.

The second receiving member 58 is provided as a disc-like member having a through hole formed at the center, is disposed about the central axis of the threaded shaft 24 and the guide tube 25, and is fixed to the first casing portion 35 of the cylinder body 20. Also, the second receiving member 58 is disposed so as to face the pivot member 56 on the anti-braking direction in a direction parallel to the direction of the central axis of the threaded shaft 24 and the guide tube 25, or in other words, is disposed so as to face the surface opposite to the surface of the pivot member 56 that faces the first receiving member 57.

Further, the surface of the pivot member 56 that faces the second receiving member 58 is provided with second inclined grooves (not shown) that are formed such that the depth thereof changes in inclination with respect to the pivoting direction of the pivot member 56. Also, second rolling members 60 (indicated by the dashed line in FIG. 22) capable of rolling along the inner surface of the second inclined grooves are disposed in the second inclined grooves. The second rolling members 60 are provided as spherical members, and are supported in a state of being sandwiched by the pivot member 56 and the second receiving member 58. A plurality of the above-described second inclined grooves and second rolling members 60 are provided so as to be positioned along the circumference of a circle about the central axis of the threaded shaft 24 and the guide tube 25.

In the brake cylinder device 3, compressed air is supplied to the pressure chamber 37 during the braking operation, and thereby the piston 50 moves in the anti-braking direction against the biasing force of the piston spring 23, which causes rotation of the rollers 61 in contact with inclined surfaces 53a of the piston 50. Then, the rollers 61 rotate with respect to the shaft portions of the pivot member 56 and the pivot member 56 pivots about the central axis of the threaded shaft 24 and the guide tube 25 in a predetermined direction of rotation. As a result of pivoting of the pivot member 56, the first rolling members 59 roll in the first inclined grooves and the second rolling members 60 roll in the second inclined grooves. Thereby, the pivot member 56 and the first receiving member 57 move in the braking direction relative to the cylinder body 20. Then, the guide tube 25, the pusher spring 26, the threaded shaft 24, and the like move in the braking direction, which causes the brake output portion 21 to move in the braking direction.

On the other hand, when the brake releasing operation is performed in the brake cylinder device 3, the compressed air is discharged from the pressure chamber 37, and the piston 50 moves in the braking direction by the biasing force of the piston spring 23. Then, the pivot member 56, the first receiving member 57, the first rolling members 59, and the second rolling members 60 move in the direction opposite to that in the case of the above-described braking operation. Thereby, the guide tube 25, the pusher spring 26, the threaded shaft 24, and the like move in the anti-braking direction, which causes the brake output portion 21 to move in the anti-braking direction. Since the first receiving member 57 is biased in the anti-braking direction by the spring 62 during the brake releasing operation as well, the first rolling members 59 roll in the first inclined grooves and the second rolling members 60 roll in the second inclined grooves.

Note that the clearance adjustment mechanism composed of the clutch nut 27, the front stopper 28, the first clutch 29, the second clutch 32, the threaded shaft 24, the guide tube 25, the pusher spring 26, the adjustment stoppers 30, the adjustment spring 31, and so forth operates in the same manner as in the case of the first embodiment. Therefore, in this embodiment as well, for the brake cylinder device 3 including the clearance adjustment mechanism for automatically adjusting the clearance up to the brake operating position in the brake-released state, it is possible to provide a configuration that is less likely to be affected by the surrounding environment such as temperature and humidity at low cost, and also achieve a reduction in the radial dimension of the cylinder body 20, as with the first embodiment.

### Modifications

Although the embodiments of the present invention have been described thus far, the present invention is not limited to the above-described embodiments, and various modifications may be made within the scope recited in the claims. For example, the following modifications are possible.
(1) Although the first embodiment has been described, taking as an example, a configuration in which the pusher spring is disposed so as to be capable of biasing the threaded shaft with respect to the guide tube toward the braking direction, this need not be the case. It is possible to adopt a configuration in which the pusher spring is disposed so as to be capable of biasing the threaded shaft with respect to the piston toward the braking direction.
(2) The shape and the arrangement of the adjustment spring, the adjustment stopper, the front stopper, the adjustment sleeve, and the spring stopper are not limited to the examples described in the embodiments, and modifications may be made. Also, modifications may be made to the shape of the clutch nut, the first clutch, and the second clutch.
(3) Although the above embodiments have been described, taking as an example, a configuration in which only the front stopper is fixed to the inner circumference of the guide tube by threaded coupling, this need not be the case. The first clutch may also be fixed to the inner circumference of the guide tube by threaded coupling. Further, the front stopper may be fixed to the inner circumference of the guide tube by press fitting.
(4) Although the above embodiments have been described, taking as an example, a configuration in which the teeth capable of engaging the second clutch with the clutch nut are formed on both the surface of the second clutch that faces the clutch nut and the surface of the clutch nut that faces the second clutch, this need not be the case. It is also possible to adopt a configuration in which the teeth are formed on one of the mutually facing surfaces.
(5) Although the above embodiments have been described, taking as an example, a case in which compressed air is used as the pressure fluid for operating the brake cylinder device, the pressure fluid is not limited thereto. The brake cylinder device may be operated with other kinds of pressure fluid (e.g., pressure oil).
(6) Although the above embodiments have been described, taking, as an example, a configuration in which the adjustment spring is in contact with, or connected to, the second clutch at the first end, this need not be the case. It is also possible to adopt a configuration in which the adjustment spring is in contact with, or connected to, the adjustment stopper at the first end.
(7) In the case where the force amplifying mechanism is provided in the brake cylinder device, the configuration is not limited to the exemplary configuration described in the second embodiment, and various modifications may be made to the configuration of the force amplifying mechanism. For example, it is also possible to adopt a configuration in which the force amplifying mechanism includes a receiving member fixed to the guide tube, the pivot member is provided so as to be threaded into the thread formed on the outer circumferential face of the receiving member, and the receiving member moves in the braking direction by pivoting of the pivot member in a predetermined direction of rotation. Furthermore, the configuration of the force amplifying mechanism is not limited to the one in which two receiving members, namely the first receiving member and the second receiving member, are provided as the receiving members to the amplifying mechanism, and it is possible to adopt a configuration of the force amplifying mechanism provided with only one receiving member.

### Industrial Applicability

The present invention is widely applicable to a brake cylinder device including a clearance adjustment mechanism for automatically adjusting a clearance up to a brake operating position in a brake-released state, and a disc brake device including the brake cylinder device.

### Descriptions of Reference Numerals

- 2: Brake cylinder device
- 20: Cylinder body
- 21: Brake output portion
- 22: Piston
- 23: Piston spring
- 24: Threaded shaft
- 25: Guide tube
- 26: Pusher spring
- 27: Clutch nut
- 28: Front stopper
- 29: First clutch
- 30: Adjustment stopper
- 31: Adjustment spring
- 32: Second clutch

## Claims

1. A brake cylinder device (2, 3) comprising:
a cylinder body (20) having a hollow interior;
a piston (22, 50) that defines a pressure chamber (37) inside the cylinder body (20) and to which a biasing force generated by a piston spring (23) is transmitted, the piston (22, 50) moving relative to the cylinder body (20) against the biasing force of the piston spring (23) by supply of pressure fluid to the pressure chamber (37);
a brake output portion (21) that is provided so as to be movable together with the piston (22) or provided so as to be movable via a force amplifying mechanism (51) for amplifying a force generated in the piston (50) as a result of movement of the piston (50), the brake output portion (21) being movable in a braking direction in which it projects from the cylinder body (20) and an anti-braking direction in which it approaches the cylinder body (20);
a threaded shaft (24) that is connected to the brake output portion (21) and has a thread formed on an outer circumference thereof;
**characterized in that** it comprises
a guide tube (25) that is attached to the piston (22) or the force amplifying mechanism (51) and accommodates the threaded shaft (24) thereinside;
a pusher spring (26) disposed so as to be capable of biasing the threaded shaft (24) toward the braking direction to the guide tube (25) or the piston (22);
a clutch nut (27) for threadably engaging with a tip of the threaded shaft (24) disposed on the brake output portion (21) side with respect to the cylinder body (20);
a front stopper (28) disposed so as to be capable of coming into contact with the clutch nut (27) on a front side, which is the brake output portion (21) side with respect to the clutch nut (27) such that a movement of the clutch nut (27) with respect to the guide tube (25) is restricted, and biasing the clutch nut (27) and the threaded shaft (24) in the anti-braking direction together with a movement of the guide tube (25) in the anti-braking direction;
a first clutch (29) disposed so as to be capable of coming into contact with the clutch nut (27) via a predetermined interval from the front stopper (28) on a rear side, which is a side opposite to the brake output portion (21) side with respect to the clutch nut (27);
an adjustment stopper (30) that is disposed so as to be movable relative to the clutch nut (27) and the guide tube (25) along the axial direction of the threaded shaft (24) and whose movable range is restricted with respect to the cylinder body (20);
a second clutch (32) to which the adjustment stopper (30) is fixed, and that is disposed so as to be capable of coming into contact with the clutch nut (27) on the rear side; and
an adjustment spring (31) that is in contact with or connected to the adjustment stopper (30) or the second clutch (32) at a first end thereof and is capable of biasing the clutch nut (27) toward the anti-braking direction.

2. The brake cylinder device (2, 3) according to claim 1,
wherein the threaded shaft (24) has a hollow interior formed so as to be open toward a side opposite to the brake output portion (21), and
the pusher spring (26) biases the clutch nut (27) threadably engaged with the threaded shaft (24) toward the front stopper (28) by biasing the threaded shaft (24) from inside.

3. The brake cylinder device (2, 3) according to claim 2,
further comprising a pusher spring guide (38) that is formed as a shaft-like portion provided so as to be movable together with the guide tube (25) and is inserted inside the pusher spring (26) provided as a coil-shaped spring to restrict deformation of the pusher spring (26) in the buckling direction,
wherein the pusher spring guide (38) is disposed such that a tip thereof is slidable on the inside of the threaded shaft (24).

4. The brake cylinder device (2, 3) according to any one of claims 1 to 3,
wherein the front stopper (28) and the first clutch (29) are provided as separate unitary members, and are each fixed to the guide tube (25).

5. The brake cylinder device (2, 3) according to claim 4,
wherein at least one of the front stopper (28) and the first clutch (29) is fixed to an inner circumference of the guide tube (25) by threaded coupling.

6. The brake cylinder device (2, 3) according to any one of claims 1 to 5,
further comprising an adjustment sleeve (33) that is provided as a tubular member disposed around the threaded shaft (24) and having flexibility, and is biased toward the anti-braking direction by a second end of the adjustment spring (31) whose first end is in contact with or connected to the adjustment stopper (30) or the second clutch (32),
wherein the clutch nut (27) and the adjustment sleeve (33) are configured integrally by engagement of an engaging portion (33a) formed on the adjustment sleeve (33) with an engaged portion (27c) formed on the clutch nut (27).

7. The brake cylinder device (2,3) according to claim 6,
wherein the engaging portion (33a) of the adjustment sleeve (33) engages from inside with the engaged portion (27c) formed on an inner circumference of the clutch nut (27), and
a clearance formed between an inner circumference of the adjustment sleeve (33) and a top of a ridge of the threaded shaft (24) has a smaller dimension in the radial direction of the adjustment sleeve (33) than a dimension, in the radial direction of the adjustment sleeve (33), of indented portions of the engaging portion (33a) and the engaged portion (27c) that are fitted together.

8. The brake cylinder device (2, 3) according to claim 7,
wherein the adjustment spring (31) is disposed so as to bias, at the second end thereof, a spring receiver attached to the adjustment sleeve (33), and
the spring receiver is disposed such that a clearance formed between the outer circumference of the spring receiver and the inner circumference of the guide tube (25) has a dimension in the radial direction of the guide tube (25) that is substantially zero, or is disposed such that the outer circumference of the spring receiver and the inner circumference of the guide tube (25) are in sliding contact.

9. The brake cylinder device (2, 3) according to claim 8, wherein the spring receiver includes a bearing (40).

10. The brake cylinder device (2, 3) according to any one of claims 1 to 9,
further comprising a spring stopper (34) that restricts, to a predetermined amount or less, the amount of displacement of the adjustment spring (31) due to elastic deformation caused by relative displacement of a second end of the adjustment spring (31) with respect to the first end thereof that is in contact with or connected to the adjustment stopper (30) or the second clutch (32).

11. The brake cylinder device (2, 3) according to any one of claims 1 to 10,
wherein teeth capable of engaging the second clutch (32) with the clutch nut (27) are formed on at least one of a surface of the second clutch (32) that faces the clutch nut (27) and a surface of the clutch nut (27) that faces the second clutch (32).

12. The brake cylinder device (2, 3) according to any one of claims 1 to 11,
wherein the threaded shaft (24) is provided, at a tip thereof, with an operation engaging portion (24c) capable of engaging with an operation tool, and is disposed such that the tip passes through the brake output portion (21) and faces outward,
an engagement mechanism (42) is further provided that is disposed on the outer circumference of the tip of the threaded shaft (24) and engages the threaded shaft (24) with the brake output portion (21), and
the engagement mechanism (42) includes an outer circumferential engaging portion (43) that has engaging teeth (43a) capable of engaging with the brake output portion (21) and is fixed to the outer circumference of the threaded shaft (24), and an engaging spring (44) that biases the outer circumferential engaging portion (43) toward the braking direction so as to engage the engaging teeth (43a) with the brake output portion (21).

13. A disc brake device (1) comprising: the brake cylinder device (2, 3) according to any one of claims 1 to 12; and a caliper body (11) that is equipped with the brake cylinder device (2, 3) and is attached to a vehicle so as to be displaceable relative to the vehicle in the direction of an axle,
wherein operation of the brake cylinder device (2, 3) causes a disc on the axle side to be sandwiched by a pair of brake pads attached to the caliper body (11), thereby generating braking force.

## Patentansprüche

1. Bremszylindervorrichtung (2, 3), umfassend:
einen Zylinderkörper (20) mit einem hohlen Inneren;
einen Kolben (22, 50), der eine Druckkammer (37) im Inneren des Zylinderkörpers (20) definiert und auf den eine Vorspannkraft, die durch eine Kolbenfeder (23) erzeugt wird, übertragen wird, wobei sich der Kolben (22, 50) relativ zu dem Zylinderkörper (20) gegen die Vorspannkraft der Kolbenfeder (23) durch Zufuhr eines Druckfluids zu der Druckkammer (37) bewegt;
einen Bremsausgangsabschnitt (21), der bereitgestellt ist, um zusammen mit dem Kolben (22) bewegbar zu sein, oder bereitgestellt ist, um über einen Kraftverstärkungsmechanismus (51) zum Verstärken einer Kraft, die in dem Kolben (50) infolge einer Bewegung des Kolbens (50) erzeugt wird, bewegbar zu sein, wobei der Bremsausgangsabschnitt (21) in einer Bremsrichtung, in der er von dem Zylinderkörper (20) vorsteht, und einer Gegenbremsrichtung, in der er sich dem Zylinderkörper (20) nähert, bewegbar ist;
eine Gewindewelle (24), die mit dem Bremsausgangsabschnitt (21) verbunden ist und ein Gewinde aufweist, das auf einem äußeren Umfang davon gebildet ist;
**dadurch gekennzeichnet, dass** sie Folgendes umfasst:
eine Führungsröhre (25), die an dem Kolben (22) oder dem Kraftverstärkungsmechanismus (51) angebracht ist und die Gewindewelle (24) darin aufnimmt;
eine Schieberfeder (26), die angeordnet ist, um imstande zu sein, die Gewindewelle (24) in der Bremsrichtung hin zu der Führungsröhre (25) oder dem Kolben (22) vorzuspannen;
eine Kupplungsmutter (27) zum Gewindeeingreifen mit einer Spitze der Gewindewelle (24), die auf der Seite des Bremsausgangsabschnitts (21) in Bezug auf den Zylinderkörper (20) angeordnet ist;
einen vorderen Anschlag (28), der angeordnet ist, um imstande zu sein, mit der Kupplungsmutter (27) auf einer Vorderseite in Kontakt zu kommen, welche die Seite des Bremsausgangsabschnitts (21) in Bezug auf die Kupplungsmutter (27) ist, sodass eine Bewegung der Kupplungsmutter (27) in Bezug auf die Führungsröhre (25) eingeschränkt ist, und die Kupplungsmutter (27) und die Gewindewelle (24) in der Gegenbremsrichtung zusammen mit einer Bewegung der Führungsröhre (25) in der Gegenbremsrichtung vorzuspannen;
eine erste Kupplung (29), die angeordnet ist, um imstande zu sein, mit der Kupplungsmutter (27) über ein vorbestimmtes Intervall von dem vorderen Anschlag (28) auf einer Rückseite in Kontakt zu kommen, die eine Seite gegenüberliegend zu der Seite des Bremsausgangsabschnitts (21) in Bezug auf die Kupplungsmutter (27) ist;
einen Einstellanschlag (30), der angeordnet ist, um relativ zu der Kupplungsmutter (27) und der Führungsröhre (25) entlang der axialen Richtung der Gewindewelle (24) bewegbar zu sein, und dessen Bewegungsbereich in Bezug auf den Zylinderkörper (20) eingeschränkt ist;
eine zweite Kupplung (32), an welcher der Einstellanschlag (80) befestigt ist und die angeordnet ist, um imstande zu sein, mit der Kupplungsmutter (27) auf der Rückseite in Kontakt zu kommen; und
eine Einstellfeder (31), die mit dem Einstellanschlag (30) oder der zweiten Kupplung (32) an einem ersten Ende davon in Kontakt oder damit verbunden ist und imstande ist, die Kupplungsmutter (27) in der Gegenbremsrichtung hin vorzuspannen.

2. Bremszylindervorrichtung (2, 3) nach Anspruch 1,
wobei die Gewindewelle (24) ein hohles Inneres aufweist, das gebildet ist, um hin zu einer Seite gegenüberliegend zu dem Bremsausgangsabschnitt (21) offen zu sein, und
die Schieberfeder (26) die Kupplungsmutter (27), die mit der Gewindewelle (24) in Gewindeeingriff steht, hin zu dem vorderen Anschlag (28) durch Vorspannen der Gewindewelle (24) von innen vorspannt.

3. Bremszylindervorrichtung (2, 3) nach Anspruch 2,
ferner umfassend eine Schieberfederführung (38), die als ein schaftartiger Abschnitt gebildet ist, der bereitgestellt ist, um zusammen mit der Führungsröhre (25) bewegbar zu sein, und ins Innere der Schieberfeder (26) eingesetzt ist, die als eine spiralförmige Feder bereitgestellt ist, um eine Verformung der Schieberfeder (26) in der Knickrichtung einzuschränken,
wobei die Schieberfederführung (38) derart angeordnet ist, dass eine Spitze davon auf dem Inneren der Gewindewelle (24) verschiebbar ist.

4. Bremszylindervorrichtung (2, 3) nach einem der Ansprüche 1 bis 3,
wobei der vordere Anschlag (28) und die erste Kupplung (29) als separate einheitliche Elemente bereitgestellt und an der Führungsröhre (25) befestigt sind.

5. Bremszylindervorrichtung (2, 3) nach Anspruch 4,
wobei mindestens eines von dem vorderen Anschlag (28) und der ersten Kupplung (29) an einem inneren Umfang der Führungsröhre (25) durch Gewindekopplung befestigt ist.

6. Bremszylindervorrichtung (2, 3) nach einem der Ansprüche 1 bis 5,
ferner umfassend eine Einstellhülse (33), die als ein rohrförmiges Element bereitgestellt ist, das um die Gewindewelle (24) angeordnet ist und eine Flexibilität aufweist, und in der Gegenbremsrichtung hin durch ein zweites Ende der Einstellfeder (31) vorgespannt wird, deren erstes Ende mit dem Einstellanschlag (30) oder der zweiten Kupplung (32) in Kontakt oder damit verbunden ist,
wobei die Kupplungsmutter (27) und die Einstellhülse (33) durch Eingriff eines eingreifenden Abschnitts (33a), der auf der Einstellhülse (33) gebildet ist, mit einem Eingriffsabschnitt (27c), der auf der Kupplungsmutter (27) gebildet ist, einstückig eingerichtet sind.

7. Bremszylindervorrichtung (2, 3) nach Anspruch 6,
wobei der eingreifende Abschnitt (33a) der Einstellhülse (33) von innen mit dem Eingriffsabschnitt (27c), der auf einem inneren Umfang der Kupplungsmutter (27) gebildet ist, eingreift, und
ein Abstand, der zwischen einem inneren Umfang der Einstellhülse (33) und einem Oberteil eines Stegs der Gewindewelle (24) gebildet ist, eine kleinere Abmessung in der radialen Richtung der Einstellhülse (33) aufweist als eine Abmessung in der radialen Richtung der Einstellhülse (33) von eingekerbten Abschnitten des eingreifenden Abschnitts (33a) und des Eingriffsabschnitts (27c), die zusammengefügt werden.

8. Bremszylindervorrichtung (2, 3) nach Anspruch 7,
wobei die Einstellfeder (31) angeordnet ist, um, an dem zweiten Ende davon, eine Federaufnahme, die an der Einstellhülse (38) angebracht ist, vorzuspannen, und
die Federaufnahme derart angeordnet ist, dass ein Abstand, der zwischen dem äußeren Umfang der Federaufnahme und dem inneren Umfang der Führungsröhre (25) gebildet ist, eine Abmessung in der radialen Richtung der Führungsröhre (25) aufweist, die im Wesentlichen null beträgt, oder derart angeordnet ist, dass der äußere Umfang der Federaufnahme und der innere Umfang der Führungsröhre (25) in Gleitkontakt sind.

9. Bremszylindervorrichtung (2, 5) nach Anspruch 8, wobei die Federaufnahme ein Lager (40) aufweist.

10. Bremszylindervorrichtung (2, 3) nach einem der Ansprüche 1 bis 9,
ferner umfassend einen Federanschlag (34), der zu einem vorbestimmten Betrag oder weniger den Verschiebungsbetrag der Einstellfeder (31) aufgrund elastischer Verformung, die durch relative Verschiebung eines zweiten Endes der Einstellfeder (31) in Bezug auf das erste Ende davon, das mit dem Einstellanschlag (30) oder der zweiten Kupplung (32) in Kontakt oder damit verbunden ist, verursacht wird, einschränkt.

11. Bremszylindervorrichtung (2, 3) nach einem der Ansprüche 1 bis 10,
wobei Zähne, die imstande sind, die zweite Kupplung (32) mit der Kupplungsmutter (27) in Eingriff zu bringen, auf mindestens einer Fläche der zweiten Kupplung (32), die der Kupplungsmutter (27) zugewandt ist, und einer Fläche der Kupplungsmutter (27), die der zweiten Kupplung (32) zugewandt ist, gebildet sind.

12. Bremszylindervorrichtung (2, 3) nach einem der Ansprüche 1 bis 11,
wobei die Gewindewelle (24) an einer Spitze davon mit einem eingreifenden Betätigungsabschnitt (24c) bereitgestellt ist, der imstande ist, mit einem Betätigungswerkzeug in Eingriff zu kommen, und derart angeordnet ist, dass die Spitze durch den Bremsausgangsabschnitt (21) gelangt und nach außen gewandt ist,
ein Eingriffsmechanismus (42) ferner bereitgestellt ist, der auf dem äußeren Umfang der Spitze der Gewindewelle (24) angeordnet ist und die Gewindewelle (24) mit dem Bremsausgangsabschnitt (21) in Eingriff bringt, und
der Eingriffsmechanismus (42) einen äußeren umlaufenden eingreifenden Abschnitt (48), der eingreifende Zähne (43a) aufweist, die imstande sind, mit dem Bremsausgangsabschnitt (21) in Eingriff zu kommen, und an dem äußeren Umfang der Gewindewelle (24) befestigt ist, und eine eingreifende Feder (44), die den äußeren umlaufenden eingreifenden Abschnitt (43) in der Bremsrichtung hin vorspannt, um die eingreifenden Zähne (43a) mit dem Bremsausgangsabschnitt (21) in Eingriff zu bringen, aufweist.

13. Scheibenbremsvorrichtung (1), umfassend die
Bremszylindervorrichtung (2, 3) nach einem der Ansprüche 1 bis 12; und einen Bremssattelkörper (11), der mit der Bremszylindervorrichtung (2, 3) versehen und an einem Fahrzeug angebracht ist, um relativ zu dem Fahrzeug in der Richtung einer Achse verschiebbar zu sein,
wobei eine Betätigung der Bremszylindervorrichtung (2, 3) eine Scheibe auf der Achsenseite bewirkt, durch ein Paar von Bremsbelägen, die an dem Bremssattelkörper (11) angebracht sind, sandwichartig eingeschlossen zu werden, wodurch eine Bremskraft erzeugt wird.

## Revendications

1. Dispositif de cylindre de frein (2, 3) comprenant :
un corps de cylindre (20) ayant un intérieur creux ;
un piston (22, 50) qui définit une chambre de pression (37) à l'intérieur du corps de cylindre (20) et auquel une force de sollicitation générée par un ressort de piston (23) est transmise, le piston (22, 50) se déplaçant par rapport au corps de cylindre (20) contre la force de sollicitation du ressort de piston (23) par la fourniture d'un fluide de pression à la chambre de pression (37) ;
une portion de sortie de frein (21) qui est prévue de façon à être mobile conjointement au piston (22) ou prévue de façon à être mobile via un mécanisme d'amplification de force (51) pour amplifier une force générée dans le piston (50) suite à un mouvement du piston (50), la portion de sortie de frein (21) étant mobile dans une direction de freinage dans laquelle elle dépasse du corps de cylindre (20) et une direction d'anti-freinage dans laquelle elle s'approche du corps de cylindre (20) ;
un arbre fileté (24) qui est raccordé à la portion de sortie de frein (21) et qui comporte un filetage formé sur une circonférence extérieure de celui-ci ;
**caractérisé en ce qu'**il comprend
un tube de guidage (25) qui est fixé au piston (22) ou au mécanisme d'amplification de force (51) et loge l'arbre fileté (24) à l'intérieur ;
un ressort lanceur (26) disposé de façon à être capable de solliciter l'arbre fileté (24) vers la direction de freinage sur le tube de guidage (25) ou le piston (22) ;
un écrou d'embrayage (27) pour s'enclencher par filetage avec un bout de l'arbre fileté (24) disposé du côté portion de sortie de frein (21) par rapport au corps de cylindre (20) ;
une butée avant (28) disposée de façon à être capable de venir en contact avec l'écrou d'embrayage (27) sur un côté avant, qui est le côté portion de sortie de frein (21) par rapport à l'écrou d'embrayage (27) de sorte qu'un mouvement de l'écrou d'embrayage (27) par rapport au tube de guidage (25) est restreint, et de solliciter l'écrou d'embrayage (27) et l'arbre fileté (24) dans la direction d'anti-freinage conjointement à un déplacement du tube de guidage (25) dans la direction d'anti-freinage ;
un premier embrayage (29) disposé de façon à être capable de venir en contact avec l'écrou d'embrayage (27) via un intervalle prédéterminé depuis la butée avant (28) sur un côté arrière, qui est un côté opposé au côté portion de sortie de frein (21) par rapport à l'écrou
d'embrayage (27) ;
une butée de réglage (30) qui est disposée de façon à être mobile par rapport à l'écrou d'embrayage (27) et au tube de guidage (25) suivant la direction axiale de l'arbre fileté (24) et dont une plage de mouvement est restreinte par rapport au corps de cylindre (20) ;
un second embrayage (32) auquel la butée de réglage (30) est fixée, et qui est disposé de façon à être capable de venir en contact avec l'écrou d'embrayage (27) sur le côté arrière ; et
un ressort de réglage (31) qui est en contact avec ou raccordé à la butée de réglage (30) ou le second embrayage (32) au niveau d'une première extrémité de celui-ci et est capable de solliciter l'écrou d'embrayage (27) vers la direction d'anti-freinage.

2. Dispositif de cylindre de frein (2, 3) selon la revendication 1,
dans lequel l'arbre fileté (24) a un intérieur creux formé de façon à être ouvert vers un côté opposé à la portion de sortie de frein (21), et
le ressort lanceur (26) sollicite l'écrou d'embrayage (27) enclenché par filetage avec l'arbre fileté (24) vers la butée avant (28) en sollicitant l'arbre fileté (24) depuis l'intérieur.

3. Dispositif de cylindre de frein (2, 3) selon la revendication 2,
comprenant en outre un guide de ressort lanceur (38) qui est formé comme une portion de type arbre prévue de façon à être mobile conjointement au tube de guidage (25) et est inséré à l'intérieur du ressort lanceur (26) prévu comme un ressort hélicoïdal pour restreindre une déformation du ressort lanceur (26) dans la direction de flambage,
dans lequel le guide de ressort lanceur (38) est disposé de sorte qu'un bout de celui-ci est coulissant sur l'intérieur de l'arbre fileté (24).

4. Dispositif de cylindre de frein (2, 3) selon l'une quelconque des revendications 1 à 3,
dans lequel la butée avant (28) et le premier embrayage (29) sont prévus en tant qu'organes monoblocs séparés, et sont fixés chacun au tube de guidage (25).

5. Dispositif de cylindre de frein (2, 3) selon la revendication 4,
dans lequel au moins l'un de la butée avant (28) et du premier embrayage (29) est fixé à une circonférence intérieure du tube de guidage (25) par couplage fileté.

6. Dispositif de cylindre de frein (2, 3) selon l'une quelconque des revendications 1 à 5,
comprenant en outre un manchon de réglage (33) qui est prévu en tant qu'organe tubulaire disposé autour de l'arbre fileté (24) et ayant une flexibilité, et est sollicité vers la direction d'anti-freinage par une seconde extrémité du ressort de réglage (31) dont la première extrémité est en contact avec ou raccordée à la butée de réglage (30) ou le second embrayage (32),
dans lequel l'écrou d'embrayage (27) et le manchon de réglage (33) sont configurés d'un seul tenant par l'enclenchement d'une portion d'enclenchement (33a) formée sur le manchon de réglage (33) avec une portion enclenchée (27c) formée sur l'écrou d'embrayage (27).

7. Dispositif de cylindre de frein (2, 3) selon la revendication 6,
dans lequel la portion d'enclenchement (33a) du manchon de réglage (33) s'enclenche depuis l'intérieur avec la portion enclenchée (27c) formée sur une circonférence intérieure de l'écrou d'embrayage (27), et
un débattement formé entre une circonférence intérieure du manchon de réglage (33) et un dessus d'une arête de l'arbre fileté (24) a une dimension plus petite dans la direction radiale du manchon de réglage (33) qu'une dimension, dans la direction radiale du manchon de réglage (33), de portions indentées de la portion d'enclenchement (33a) et de la portion enclenchée (27c) qui sont ajustées ensemble.

8. Dispositif de cylindre de frein (2, 3) selon la revendication 7,
dans lequel le ressort de réglage (31) est disposé de façon à solliciter, au niveau de la seconde extrémité de celui-ci, un récepteur de ressort fixé au manchon de réglage (33), et le récepteur de ressort est disposé de sorte qu'un débattement formé entre la circonférence extérieure du récepteur de ressort et la circonférence intérieure du tube de guidage (25) a une dimension dans la direction radiale du tube de guidage (25) qui est sensiblement nulle, ou est disposé de sorte que la circonférence extérieure du récepteur de ressort et la circonférence intérieure du tube de guidage (25) sont en contact coulissant.

9. Dispositif de cylindre de frein (2, 3) selon la revendication 8, dans lequel le récepteur de ressort inclut un palier (40).

10. Dispositif de cylindre de frein (2, 3) selon l'une quelconque des revendications 1 à 9,
comprenant en outre une butée de ressort (34) qui restreint, à une quantité prédéterminée ou moins, la quantité de déplacement du ressort de réglage (31) due à une déformation élastique provoquée par un déplacement relatif d'une seconde extrémité du ressort de réglage (31) par rapport à la première extrémité de celui-ci qui est en contact avec ou raccordée à la butée de réglage (30) ou au second embrayage (32).

11. Dispositif de cylindre de frein (2, 3) selon l'une quelconque des revendications 1 à 10,
dans lequel des dents capables d'enclencher le second embrayage (32) avec l'écrou d'embrayage (27) sont formées sur au moins l'une d'une surface du second embrayage (32) qui est tournée vers l'écrou d'embrayage (27) et d'une surface de l'écrou d'embrayage (27) qui est tournée vers le second embrayage (32).

12. Dispositif de cylindre de frein (2, 3) selon l'une quelconque des revendications 1 à 11,
dans lequel l'arbre fileté (24) est pourvu, au niveau d'un bout de celui-ci, d'une portion d'enclenchement de fonctionnement (24c) capable de s'enclencher avec un outil de fonctionnement, et est disposé de sorte que le bout passe à travers la portion de sortie de frein (21) et est tourné vers l'extérieur,
un mécanisme d'enclenchement (42) est en outre prévu lequel est disposé sur la circonférence extérieure du bout de l'arbre fileté (24) et enclenche l'arbre fileté (24) avec la portion de sortie de frein (21), et
le mécanisme d'enclenchement (42) inclut une portion d'enclenchement circonférentielle extérieure (43) qui a des dents d'enclenchement (43a) capables de s'enclencher avec la portion de sortie de frein (21) et est fixée à la circonférence extérieure de l'arbre fileté (24), et un ressort d'enclenchement (44) qui sollicite la portion d'enclenchement circonférentielle extérieure (43) vers la direction de freinage de façon à enclencher les dents d'enclenchement (43a) avec la portion de sortie de frein (21).

13. Dispositif de frein à disque (1) comprenant : le dispositif de cylindre de frein (2, 3) selon l'une quelconque des revendications 1 à 12 ; et un corps d'étrier (11) qui est équipé du dispositif de cylindre de frein (2, 3) et est fixé à un véhicule de façon à être déplaçable par rapport au véhicule dans la direction d'un essieu,
dans lequel un fonctionnement du dispositif de cylindre de frein (2, 3) amène un disque du côté essieu à être enserré entre une paire de patins de frein fixés au corps d'étrier (11), générant ainsi une force de freinage.
